# EUROPEAN PATENT SPECIFICATION

(11) **EP 3 013 897 B1**
(45) Date of publication and mention of the grant of the patent: **15.03.2017**
(21) Application number: 14744172.9
(22) Date of filing: 20.06.2014
(51) Int. Cl.: C08L 9/06, B60C 1/00, C08K 5/372, C08L 21/00, C08K 3/22

(54) **TYRE FOR VEHICLE WHEELS**
REIFEN FÜR FAHRZEUGRÄDER
PNEU POUR ROUES DE VÉHICULES

(30) Priority: 24.06.2013 IT MI20131048
(43) Date of publication of application: 04.05.2016
(73) Proprietor: Pirelli Tyre S.p.A., 20126 Milano (IT)
(72) Inventor: DALL'ABACO, Davide, I-20126 Milano (MI) (IT); DE VITA, Cinzia, I-20126 Milano (MI) (IT); DE CANCELLIS, Pierluigi, I-20126 Milano (MI) (IT); PRANDINI, Elena, I-20126 Milano (MI) (IT)
(74) Representative: Fraire, Cristina
(86) International application number: PCT/IB2014/062489
(87) International publication number: WO 2014/207639

(56) References cited:
- EP-A1- 0 629 652
- EP-A1- 0 780 429
- EP-A1- 2 517 898
- WO-A1-2008/074341
- US-A- 4 513 123
- US-A- 5 336 730
- US-A1- 2001 023 729
- US-A1- 2011 054 109

## Description

### Technical field of the invention

The present invention generically relates to the field of tyres for vehicle wheels and/or manufacturing processes/methods thereof. Preferably the invention relates to a high and ultra high performance tyre for wheels of vehicles with two or four wheels for applications that require high speeds and/or extreme driving conditions, typically but not only tyres capable of sustaining maximum speeds of at least about 210 km/h or support maximum loads of at least about 210 kg or a combination of both. The invention can also relate to a tyre for heavy vehicle wheels.

The present invention also relates to a tyre component with high rigidity, in particular a reinforced component with high rigidity, obtainable due to the incorporation of specific co-vulcanising compositions in the elastomeric composition thereof.

Finally, the present invention relates to said co-vulcanising compositions and a process for the preparation thereof.

### PRIOR ART

The tyres for wheels of high-performance vehicles (UHP and HP vehicles such as race cars, SUVs and the like) and the tyres for wheels of heavy vehicles can be subjected to extreme stresses and use conditions; in particular, they can be subjected, in different manoeuvres, to stresses of circumferential and transverse types, and to combinations thereof, of considerable size.

Such stresses, which are transmitted between the road surface and the tyre, require a considerable engagement of the structure in its entirety, and in particular of the belt structure which for these applications can be obtained with metal reinforcement elements.

Typically, an improvement of the structure characteristics and functioning at high speeds and/or in extreme driving conditions and/or with high load of one tyre can be obtained through an increase of the rigidity of the components of the tyre and in particular of the belt structure.

3,3-dithiodipropionic acid (ADTDP) is mentioned in the patent application EP0142707 as co-vulcanising agent of mixtures and as adhesion adjuvant between rubber and metal. In this document, a composition for tyres is illustrated - comprising a rubber, carbon black, an organic compound of cobalt, sulfur and ADTDP - in which the ADTDP acts as a sulfur donor, as co-vulcanising agent and as catalyst of the reaction of formation of the resorcin-methylene donor cross-linking.

ADTDP is said to confer, to the vulcanised mixtures, a high cross-linking and an optimal adhesion to metal materials, in particular to the brass-covered steels, especially after aging.

Described in US6230773 is the use of ADTDP, possibly predispersed on carbon black or silica, in order to increase the rigidity of reinforcement inserts of the sidewalls employed in run-flat tyres.

Described in US20100059158, on behalf of the Applicant, is the use of a thiodicarboxylic acid as promoter of adhesion between elastomeric materials and metal reinforcement elements.

Described in the document US6046280 are the complexes of zinc and higher carboxylic acids (RCOOH with 5 or more carbon atoms) which, employed together with anti-reversion agents, prevent the reversion of the vulcanisation cross-linking and the subsequent stiffening of the material, maintaining the modulus thereof constant over time.

Described in US5302315 are the zinc salts of higher and aromatic carboxylic acids; the preceding state of the art is discussed relative to the presently consolidated use of fatty acid salts, such as zinc stearate or zinc laurate, as vulcanisation activators that improve the elastic modulus of the vulcanised rubbers.

### SUMMARY OF THE INVENTION

The Applicant, directing its attention towards increasing the rigidity of the elastomeric materials, first tested the possibility of increasing the sulfur percentage in the elastomeric composition of the mixtures and in particular of the rubber-covering mixtures of the belts. Even if this solution actually led to greater rigidity, it had however as secondary negative effect an increase of fragility, a reduced tear strength and a lower green adhesion (surface blooming) of the resulting elastomeric mixture.

The Applicant tried to increase the reinforcement filler in the rubber-covering mixtures of the belts, but a worsening of the processability thereof was encountered due to their greater viscosity and a considerable increase of the hysteresis, potentially critical for the integrity of the tyre.

Other solutions were tested that are able to confer greater rigidity without compromising other structural characteristics and the processability of the materials. In particular, the Applicant considered increasing the cohesion between the components by using the class of the lower (di)thiodicarboxylic acids as possible co-vulcanising agents.

For such purpose, the Applicant observed that mixtures comprising ADTDP had good adhesion to the metal cords and were actually more rigid. These mixtures, which showed a viscosity comparable to that of the conventional mixtures and a certain stickiness to the rotors of the mixers, had good processability and allowed a satisfactory rubber-covering of the cords.

Nevertheless, the Applicant observed that during the process of mixing and semi-finishing of the components, generally carried out at hot temperatures (from about 60°C - 100°C and higher) in continuous or discontinuous mixers (Banbury mixers with multimill or TSE), highly irritating volatile compounds were formed. These volatile by-products are liberated above all in the subsequent conventional calendering step, obtained in open systems and at ambient pressure, due to the high exposure surface area of the hot semi-finished product (rubber-covered fabric).

Upon analysis, these by-products were found to be ADTDP decomposition derivatives, mainly acrylic acid and 3-mercaptopropionic acid - very irritating compounds, especially for the eyes and mucous membranes, in particular for the respiratory tract, and are potentially toxic for the operators who operate on the line.

The formation of these substances via decomposition of ADTDP during the hot processing step, and the release thereof in particular in the subsequent step for rubber-covering the cords in a calender, require particularly complex apparatuses for intercepting and removing fumes, making the industrial use of ADTDP of little interest.

The Applicant confronted the problem of preventing or at least drastically reducing the release of decomposition derivatives of ADTDP and lower (di)thiodicarboxylic acid analogues thereof in the process of mixing and rubber-covering, while maintaining unaltered the high sulfur donor and cross-linking capacity of the compounds, the processability of the mixture and in particular the adhesivity towards the metal cords.

The Applicant observed that supporting ADTDP on silica as described for example in the patent US6230773 did not give satisfactory results. Indeed, it has been experimentally found that the simple pre-dispersion of the ADTDP on silica did not allow preventing the release of irritating by-products but only moving the formation thereof to temperatures that were higher but still easily reachable in the course of processing, not preventing their formation and liberation during the industrial process.

The Applicant has surprisingly found that it is possible to prevent the formation of by-products of lower (di)thiodicarboxylic acids, in particular of ADTDP, in the industrial tyre manufacturing process, in particular in the step of mixing and semi-finishing of the mixtures, due to a specific composition, termed co-vulcanising composition herein, in which the (di)thiodicarboxylic acid is stabilised as a coordinated zinc complex.

The Applicant found that the stabilisation of the (di)thiodicarboxylic acid happened if the latter was premixed with the zinc compound to give the present co-vulcanising composition, while the Applicant found that separately placing these ingredients, in particular ADTDP and zinc oxide, directly in the vulcanisable elastomeric composition with the components - without making them prereact - the desired result was not attained. Indeed, by subjecting the latter compositions to heating, the release of acrylic acid still happened, even if they contained the same quantities of ADTDP and zinc oxide in absolute terms obtainable via addition of the co-vulcanising composition c).

The Applicant found that the (di)thiodicarboxylic acid stabilised by means of pre-mixing with zinc compounds surprisingly maintains high effectiveness as cross-linking agent and that, after vulcanisation, it actually imparts greater rigidity to the elastomeric material.

In the case of elastomeric materials for rubber-covering of the reinforcement elements, the stabilised (di)thiodicarboxylic acid according to the present invention also maintains an optimal adhesivity towards the textile and/or metal reinforcement elements, in particular metal reinforcement elements.

The increase in rigidity of these materials and/or the optimal adhesivity to the reinforcement elements, in particular to the metal reinforcement elements, then translates into improved driving performances of the vehicles that use tyres which incorporate said materials. The improvement of the driving performances is more evident in the case of tyres for high and ultra-high performance cars, especially if these elastomeric materials are incorporated in the reinforcement structures, in particular in the belt structures.

The use of the co-vulcanising composition c) (masterbatch) of the (di)thiodicarboxylic acid stabilised with a zinc compound according to the present invention, improves the rigidity of the elastomeric material and its adhesivity to the metal reinforcement elements, possibly allowing the reduction of the number of metal cords per unit of area of rubber-covered layer (density or endcount) and thus, given the same mechanical performances, allows advantageously lightening the tyre.

According to one aspect, the present invention regards a method for manufacturing a tyre for vehicle wheels which comprises:
- forming a co-vulcanising composition by mixing at least one zinc compound and at least one lower (di)thiodicarboxylic acid of formula (I)

   HOOC-CHR-CHR₁-S₍ₙ₎-CHR₂-CHR₃-COOH (I)

   wherein
   n represents an integer number selected from among 1 and 2;
   R, R₁, R₂, R₃, equal or different from each other, are selected from among H, CH₃ and C₂H₅;
- forming at least one green tyre component comprising a vulcanisable elastomeric composition comprising at least:
   one elastomeric polymer,
   one reinforcement filler,
   one vulcanising agent and
   said co-vulcanising composition;
   wherein forming said co-vulcanising composition comprises stabilizing said at least one lower (di)thiodicarboxylic acid of formula (I) through interaction of said at least one zinc compound and said at least one lower (di)thiodicarboxylic acid of formula (I), in a manner so as to reduce, below a preset threshold, the release of irritating by-products of said at least one (di)thiodicarboxylic acid at least during the formation of said tyre component.

Preferably said preset threshold of release of irritating by-products of said at least one (di)thiodicarboxylic acid, such as acrylic acids and/or thiopropionic acids, is about 0.2 parts per million (ppm), preferably about 0.02 ppm (measurement carried out via HPLC-MS - high-performance liquid chromatography-mass spectrometry)

Advantageously the formation of the zinc complex can be shown by means of analytical techniques such as Fourier transform infrared spectroscopy (FT-IR), ultraviolet/visible spectroscopy (UV-Vis spectroscopy) or nuclear magnetic resonance (NMR), by evaluating the reduction of the characteristic signals of the zinc compound and the (di)thiodicarboxylic acid and the corresponding formation of at least one characteristic signal attributable to the complex.

According to one aspect, the present invention regards a tyre for vehicle wheels in which at least one component of said tyre comprises a vulcanised elastomeric composition obtained by vulcanising a vulcanisable elastomeric composition comprising at least:
one elastomeric polymer P₁,
at least one reinforcement filler a)
at least one vulcanising agent b),
a co-vulcanising composition c) obtained by mixing
   c1) at least one elastomeric polymer P₂,
   c2) at least one zinc complex obtained by interaction between:
      c3) from 20 to 80 phr with respect to P₂ of at least one zinc compound and
      c4) from 20 to 80 phr with respect to P₂ of at least one lower (di)thiodicarboxylic acid of formula (I)

         HOOC-CHR-CHR₁-S₍ₙ₎ -CHR₂-CHR₃-COOH (I)

         wherein
         n represents an integer number selected from among 1 and 2;
         R, R₁, R₂, R₃, equal or different from each other, are selected from among H, CH₃ and C₂H₅.

Preferably, according to one embodiment of the invention, said co-vulcanising composition c) is obtained by further mixing at least one plasticiser c5) with said c1), c2).

One aspect of the present invention relates to a process for manufacturing a tyre which comprises
- forming components of a green tyre on at least one forming drum;
- conforming, moulding and vulcanising the tyre;
wherein forming at least one of the green tyre components comprises:
- obtaining at least one green component comprising a vulcanisable elastomeric composition comprising at least one elastomeric polymer P₁,
   one reinforcement filler a),
   one vulcanising agent b), and
   the co-vulcanising composition c).

One aspect of the present invention relates to a green tyre component comprising a vulcanisable elastomeric composition, wherein said vulcanisable elastomeric composition comprises at least
- one elastomeric polymer P₁,
- one reinforcement filler a)
- at least one vulcanising agent b), and
- the co-vulcanising composition c).

According to one aspect, the present invention relates to a co-vulcanising composition c) (masterbatch), for vulcanising elastomeric tyre compositions, comprising
c1) at least one elastomeric polymer P₂,
c2) at least one zinc complex obtained by interaction between:
   c3) from 20 to 80 phr of at least one zinc compound and
   c4) from 20 to 80 phr of at least one lower (di)thiodicarboxylic acid of formula (I)

      HOOC-CHR-CHR₁-S ₍ₙ₎ -CHR₂-CHR₃-COOH (I)

      wherein
      n represents an integer number selected from among 1 and 2;
      R, R₁, R₂, R₃, equal or different from each other, are selected from among H, CH₃ and C₂H₅.

Preferably said co-vulcanising composition c) further comprises
c5) at least one plasticiser.

One aspect of the present invention is a precursor d) of the co-vulcanising composition c), comprising
c1) at least one elastomeric polymer P₂,
c3) from 20 to 80 phr of at least one zinc compound and
c4) from 20 to 80 phr of at least one lower (di)thiodicarboxylic acid of formula (I)

   HOOC-CHR-CHR₁-S ₍ₙ₎-CHR₂-CHR₃-COOH (I)

   wherein
   n represents an integer number selected from among 1 and 2;
   R, R₁, R₂, R₃, equal or different from each other, are selected from among H, CH₃ and C₂H₅,

Preferably said precursor d) of the co-vulcanising composition further comprises at least one plasticiser c5). One aspect of the present invention relates to a process for preparing the co-vulcanising composition c) comprising
- supplying a mixer with the precursor d) comprising
   c1) at least one elastomeric polymer P₂,
   c3) from 20 to 80 phr of at least one zinc compound,
   c4) from 20 to 80 phr of at least one lower (di)thiodicarboxylic acid of formula (I)

      HOOC-CHR-CHR1-S (n) -CHR₂-CHR₃-COOH (I)

      wherein
      n represents an integer number selected from among 1 and 2;
      R, R₁, R₂, R₃, equal or different from each other, are selected from among H, CH₃ and C₂H₅ and possibly
   c5) at least one plasticiser,
      given that the components c1), c3), c4) and, possibly, c5) are supplied simultaneously or in sequence,
- mixing said components at a molten mass temperature lower than 130°C,
- removing the co-orulcanising composition c).

### Definitions

The term 'green' is generally employed for indicating a material, a composition, a component, a tyre etc. that is not yet vulcanised, i.e. still to be subjected to vulcanisation.

In a rubber-based composition (elastomeric polymer) the term "phr" (acronym of "parts per hundred of rubber") indicates the parts by weight of a specific material or ingredient with respect to 100 parts by weight of total elastomeric polymer.

With HP and UHP the terms "High Performance" and "Ultra High Performance" are intended.

HP and UHP tyres are tyres with high and ultra-high performances, employed for vehicles with two or four wheels for applications that require high operating speeds and/or extreme driving conditions, typically (but not only) tyres capable of sustaining maximum speeds of at least about 210 km/h or support maximum loads of at least about 210 kg or combinations of both.

In the present description, the term "lower (di)thiodicarboxylic acids" indicates a class of compounds represented by the formula (I)

HOOC-CHR-CHR₁-S₍ₙ₎-CHR₂-CHR₃-COOH (I)

wherein
n represents an integer number selected from among 1 and 2;
R, R₁, R₂, R₃, equal or different from each other are selected f rom among H, CH₃ and C₂H₅.

In the present context, with the term "precursor d)" it is intended the set of ingredients that - unified in a single composition (in which said ingredients are present in premixed form or alternatively compartmentalised) before the processing or being added in subsequent steps during processing - leads to the obtainment of the co-vulcanising composition c) after processing. Said ingredients comprise at least c1), c3) and C4) as defined above.

With the term "reinforcement elements" it is intended cords, wires, yarns etc. commonly used in the field for reinforcing the structure of the tyre. In the case of metal reinforcement elements, preferably these are NT (normal tensile), HT (high tensile), SHT (super high tensile) or UHT (ultra high tensile) steel wires. Typically, such steel wires have a carbon content of less than about 1%. Preferably, the carbon content is greater than or equal to about 0.7%. The wires are typically coated with brass or another corrosion-resistant coating (e.g. Zn/Mn).

The present invention in one or more of its aspects can have one or more of the following preferred characteristics.

One embodiment according to the present invention is tyre for vehicles, preferably for vehicles whose driving performances are benefited by an increase of rigidity, such as high-performance vehicles with two or four wheels, or heavy vehicles, preferably for HP and UHP vehicles, wherein at least one component of said tyre comprises a vulcanised elastomeric composition obtained by vulcanising a vulcanisable elastomeric composition comprising said co-vulcanising composition c).

One embodiment according to the present invention relates to a tyre for vehicles, preferably a high-performance tyre (HP and UHP), comprising at least
- one carcass structure comprising at least one carcass layer having opposite lateral edges associated with respective bead structures;
- one belt structure applied in a radially external position with respect to the carcass structure,
- one tread band applied in a radially external position with respect to said belt structure,
wherein said belt structure comprises at least one belt layer, comprising reinforcement elements, more preferably metal reinforcement elements, incorporated in a vulcanised elastomeric matrix obtained by vulcanising a vulcanisable elastomeric composition comprising said co-vulcanising composition c).

The metal cords used in the layers of the belt structure comprise a plurality of wires. The wires of the metal cords used in the belt structure (and possibly also in other tyre reinforcement layers) are preferably NT (normal tensile), HT (high tensile), SHT (super high tensile) or UHT (ultra high tensile) steel wires. Typically, such steel wires have a carbon content of less than about 1%. Preferably, the carbon content is greater than or equal to about 0.7%. The wires are typically coated with brass or another corrosion-resistant coating (e.g. Zn/Mn).

Another embodiment of the tyre according to the present invention relates to a tyre for vehicles, preferably a tyre for HP and UHP vehicles, comprising at least
- one carcass structure comprising at least one carcass layer having opposite lateral edges associated with respective bead structures;
- one tread band applied in a radially external position with respect to said carcass structure;
wherein said at least one carcass layer comprises a reinforced vulcanised elastomeric composition, with textile and/or metal reinforcement elements, wherein said reinforced vulcanised elastomeric composition comprises a vulcanised elastomeric composition obtained by vulcanising a vulcanisable elastomeric composition comprising said co-vulcanising composition c). According to a preferred embodiment, said bead structure comprises at least one anchoring annular element and at least one bead filler, wherein said bead filler comprises a vulcanised elastomeric composition obtained by vulcanising a vulcanisable elastomeric composition comprising said co-vulcanising composition c).

Another embodiment of the tyre according to the present invention relates to a tyre for vehicles, preferably a tyre for HP and UHP vehicles, comprising at least
- one carcass structure comprising at least one carcass layer having opposite lateral edges associated with respective bead structures;
- one tread band applied in a radially external position with respect to said carcass structure;
wherein at least one of said bead structures comprises a vulcanised elastomeric composition obtained by vulcanising a vulcanisable elastomeric composition comprising said co-vulcanising composition c).

Preferably said bead structures further comprise reinforcement elements, more preferably reinforcement elements comprising textile and/or metal wires.

Said bead reinforcement elements can for example be flippers or chafers.

Another embodiment of the tyre according to the present invention relates to a run-flat tyre for vehicles, comprising at least
- one carcass structure comprising at least one carcass layer having opposite lateral edges associated with respective bead structures;
- one tread band applied in a radially external position with respect to said carcass structure;
- sidewalls made of elastomeric mixture applied in axially external position on the lateral surfaces of the carcass structure, each sidewall being extended from one of the lateral edges of the tread band up to the respective bead structure, wherein at least one of said sidewalls comprises a sidewall insert obtained by means of a vulcanised elastomeric composition obtained by vulcanising a vulcanisable elastomeric composition comprising said co-vulcanising composition c).

The green tyre component, comprising a vulcanisable elastomeric composition, wherein said vulcanisable elastomeric composition comprises at least
- one elastomeric polymer P₁,
- one reinforcement filler a),
- one vulcanising agent b) and
- the co-vulcanising composition c) is preferably a component reinforced with textile and/or metal reinforcement elements.

Preferably said reinforced component is selected from among carcass structures, belt structures, bead structures, flippers and/or chafers, sidewall inserts, bead filler, preferably it is a layer of the belt structure.

The tyre according to the present invention can be manufactured according to a process which comprises:
- forming components of a green tyre on at least one forming drum;
- conforming, moulding and vulcanising the tyre;
wherein forming at least one of the green tyre components comprises:
- obtaining at least one green component comprising a vulcanisable elastomeric composition comprising at least one elastomeric polymer P₁,
   one reinforcement filler a),
   one vulcanising agent b), and
   the co-vulcanising composition c).

This process is advantageously characterised in that it releases the compounds of formula (I) and their decomposition by-products in an overall quantity of less than 0.2 ppm, preferably less than 0.02 ppm (measurement carried out via HPLC-MS), and generally lower than analytical detectability limits, at least in the aforesaid step of obtaining said green component, preferably in all process steps.

The incorporation of the co-vulcanising composition c), in the elastomeric composition of at least one tyre component, confers greater rigidity to the vulcanised elastomeric composition, and if this is a component reinforced with metal reinforcement elements, it also confers high adhesion between the mixture and the wires or metal cords as shown in the present experimental part.

In particular, the incorporation of the co-vulcanising composition c) in the vulcanisable elastomeric compositions employed in reinforced structural elements comprising textile and/or metal reinforcement elements leads to a significant increase of the adhesion of the elastomeric composition to the metal elements after vulcanisation; such increase equates to at least 10% or more, as is shown in the adhesion test according to BISFA E12 with respect to the adhesion obtainable with conventional elastomeric compositions, lacking (di)thiodicarboxylic acids.

In particular, it was found that the adhesion increase is even greater after the aging of the samples, in terms of increase both of maximum pull-out force and of residual coverage after tearing.

The components and the tyres of the present invention are therefore structurally reinforced due to the increase of the rigidity of the compositions and/or due to the greater adhesion of the latter to the metal reinforcement elements.

This improvement in structural terms is reflected in the tyre performances, such tyres being better able to support the strong stresses that occur in extreme driving conditions, resulting in an optimal drivability of the cars.

The use of the co-vulcanising composition c) allows the attainment of such considerable advantages, simultaneously preventing giving rise to those toxic and irritating decomposition products of the (di)thiodapropionic acids, in particular of ADTDP, in all component and tyre manufacturing steps.

Preferably said vulcanisable elastomeric composition comprises an elastomeric polymer P₁, from 50 to 70 phr of a reinforcement filler a), from 4 to 8 phr of at least one vulcanising agent b) and from 1 to 5 phr of the co-vulcanising composition c). In such a manner, the ingredients of the elastomeric composition refer to the total quantity of elastomeric polymer present therein, e.g. if the overall mass of elastomeric polymer P₁ introduced is 100 kg, the aforesaid composition comprises from 50 to 70 kg of a reinforcement filler a), from 4 to 8 kg of at least one vulcanising agent b) and from 1 to 5 kg of the co-vulcanising composition c).

If the same composition was obtained with 50 kg of elastomeric polymer P₁ overall, the quantities of the other ingredients would be proportionally adapted. The elastomeric composition in this case would for example comprise over 50 kg of elastomeric polymer P₁ overall: from 25 to 35 kg of a reinforcement filler a), from 2 to 4 kg of at least one vulcanising agent b) and from 0.5 to 2.5 kg of the co-vulcanising composition c).

In one embodiment, said vulcanisable elastomeric composition comprises an elastomeric polymer P₁, from 55 to 65 phr of a reinforcement filler a), from 5 to 7 phr of a vulcanising agent b) and from 2 to 4 phr of a co-vulcanising composition c).

The vulcanisable elastomeric composition for obtaining tyre components comprises at least one elastomeric polymer P₁, preferably a diene elastomeric polymer P₁.

Also the co-vulcanising composition c) comprises at least one elastomeric polymer, indicated hereinbelow as elastomeric polymer P₂.

The elastomeric polymers P₁ and P₂ can be equal to or different from each other.

According to a preferred embodiment, the diene elastomeric polymer P₁ and/or P₂ that can be used in the present invention can selected from among those commonly used in elastomeric materials cross-linkable with sulfur, which are particularly adapted for producing tyres, i.e. from elastomeric polymers or copolymers with an unsaturated chain having a vitreous transition temperature (Tg) generally less than 20°C, preferably comprised in the interval from 0°C to -110°C.

These polymers or copolymers can have natural origin or they can be obtained by means of polymerisation in solution, polymerisation in emulsion or polymerisation in gaseous phase of one or more conjugated diolefins, possibly mixed with at least one comonomer selected from among monovinylarenes and/or polar comonomers.

Conjugated diolefins generally contain from 4 to 12, preferably from 4 to 8 carbon atoms and for example they can be selected from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene and isoprene are particularly preferred.

Monovinylarenes, which can possibly be used as comonomers, generally contain from 8 to 20, preferably from 8 to 12 carbon atoms and for example they can be selected from among: styrene; 1-vinylnaphthalene; 2-vinylnaphthalene; various alkyl derivatives, cyclalkyl derivatives, aryl derivatives, alkylaryl derivatives or arylalkyl derivatives of styrene, such as α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers, which can possibly be used, can for example be selected from among: vinylpyridine, vinylquinoline, acrylic acid esters and alkylacrylic acid esters, nitriles, or mixtures thereof, such as methyl acrylate, ethyl acrylate, methyl methacrylate, ethyl methacrylate, acrylonitrile or mixtures thereof.

Preferably, the diene elastomeric polymer P₁ and/or P₂ that can be used in the present invention can be selected, for example, from among: cis-1,4-polyisoprene (natural or synthetic, preferably natural rubber), 3,4-polyisoprene, polybutadiene (in particular polybutadiene with a high content of 1,4-cis), possibly halogenated copolymers of isoprene/isobutene, copolymers of 1,3-butadiene/acrylonitrile, copolymers of styrene/1,3-butadiene, copolymers of styrene/isoprene/1,3-butadiene, copolymers of styrene/1,3-butadiene/acrylonitrile, or mixtures thereof.

According to a preferred embodiment, said elastomeric composition comprises at least 10 phr, preferably between 20 phr and 100 phr of natural rubber (NR).

The aforesaid elastomeric and/or co-vulcanising compositions c) can possibly comprise at least one elastomeric polymer of one or more monoolefins with an olefin comonomer or derivatives thereof (P₁' and/or P₂'). The monoolefins can be selected from among: ethylene and α-olefin generally containing from 3 to 12 carbon atoms, such as propylene, 1-butene, 1-pentene, 1-hexene, 1-octene or mixtures thereof.

The following are preferred: copolymers from among ethylene and an α-olefina, possibly with a diene; homopolymers of isobutene or copolymers thereof with small quantities of a diene, which are possibly at least in part halogenated. The possibly present diene generally contains from 4 to 20 carbon atoms and is preferably selected from among: 1,3-butadiene, isoprene, 1,4-hexadiene, 1,4-cyclohexadiene, 5-ethylidene-2-norbornene, 3-methylene-2-norbornene, vinyl-norbornene or mixtures thereof. Among these, the following are particularly preferred: copolymers of ethylene/propylene (EPR) or copolymers of ethylene/propylene/diene (EPDM); polyisobutene; butyl rubbers; alobutyl rubbers, in particular chlorobutyl or bromobutyl rubbers; or mixtures thereof.

The following can also be used: a diene elastomeric polymer (P₁, P₂) or an elastomeric polymer (P₁', P₂') functionalised by means of reaction with terminating agents or suitable coupling agents. In particular, the diene elastomeric polymers obtained by means of anionic polymerisation in the presence of an organometallic initiator (in particular an organolithium initiator) can be functionalised by making the residual organometallic groups derived from the initiator react with terminating agents or suitable coupling agents such as imines, carbodiimides, alkyl tin halides, substituted benzophenones, alkoxysilanes or aryloxysilanes.

The vulcanisable elastomeric composition for obtaining tyre components further comprises at least one reinforcement filler a), preferably but not exclusively made of carbon black.

According to a preferred embodiment, the carbon black reinforcement filler a) that can be used in the present invention is selected from among those having a surface area greater than 40 m²/g, preferably greater than 50 m²/g, more preferably greater than 60 m²/g (determined by STSA-statistical thickness surface area according to ISO 18852:2005). Preferably such surface area is less than 150 m²/g, more preferably less than 120 m²/g. The Applicant has found that by using, in the present vulcanisable elastomeric compositions, carbon black with surface area in accordance with the above-reported intervals, one obtains an increase of the reinforcement effect conferred by the filler.

Examples of suitable carbon black are Carbon Black ASTM grade such as N220, N234, N326, N375 sold by numerous producers including Columbian, Cabot or Evonik.

According to a preferred embodiment, said carbon black reinforcement filler a) is present in the elastomeric composition in a quantity comprised between 0.1 phr and 120 phr, preferably between 20 phr and 90 phr, more preferably between 50 and 70 phr.

Alternatively or in combination with the carbon black, at least one further reinforcement filler a') can be advantageously added to the above-reported elastomeric composition, in a quantity generally comprised between 0.1 phr and 120 phr, preferably between about 20 phr and about 90 phr. The reinforcement filler a') can be selected from among those commonly used for cross-linked products, in particular for tyres, such as silica, alumina, aluminosilicates, calcium carbonate, kaolin or mixtures thereof.

The silica that can be used in the present invention can generally be a pyrogenic silica, or preferably a precipitated silica, with a surface area BET (measured according to the Standard ISO 5799/1) comprised between about 50 m²/g and about 500 m²/g, preferably between about 70 m²/g and about 200 m²/g.

The vulcanisable elastomeric composition for obtaining tyre components preferably further comprises at least one silane coupling agent.

According to a preferred embodiment, the silane coupling agent that can be used in the present invention can be selected from among those having at least one hydrolisable silane group, which for example can be identified by the following general formula (II):

(R)₃Si-CₙH₂ₙ-X (II)

where the groups R, which can be identical or different from each other, are selected from among: alkyl, alkoxy or aryloxy groups, or from halogen atoms, as long as at least one of the R groups is an alkoxy or aryloxy group; n is an integer included between 1 and 6; X is a group selected from among: nitrous, mercapto, amino, epoxide, vinyl, imide, chloro,-(S)ₘCₙH₂ₙ-Si-(R)3 or -S-COR, where m and n are integers included between 1 and 6 and the R groups are defined as above.

Among the silane coupling agents, those particularly preferred are bis(3-triethoxysilylpropyl) tetrasulfide and bis(3-triethyoxysisylpropyl) disulfide.

Said coupling agents can be used on their own or in a mixture adapted with an inert filler (e.g. carbon black) in a manner so as to facilitate their incorporation in the elastomeric composition.

According to a preferred embodiment, said silane coupling agent is present in the elastomeric composition in a quantity comprised between 0.01 phr and about 10 phr, preferably between about 0.5 phr and about 5 phr.

The vulcanisable elastomeric composition for obtaining tyre components can advantageously incorporate a silane coupling agent capable of interacting with the silica possibly present as reinforcement filler and/or the silicates and to bind them to the diene elastomeric polymer during vulcanisation.

Examples of silane coupling agents that can be used have already been described above.

The vulcanisable elastomeric composition can be vulcanised according to the prior art, in particular with sulfur-based vulcanisation agents b) commonly used for diene elastomeric polymers. For this purpose, in the materials, after one or more thermomechanical treatment stages, a sulfur-based vulcanising agent b) is incorporated together with vulcanisation accelerants. In the final treatment step, the temperature is generally maintained less than 120°C and preferably less than 100°C, in a manner so as to prevent any undesired pre-cross-linking phenomenon.

The vulcanising agent b) most advantageously used comprises sulfur, or molecules containing sulfur (sulfur donors), with accelerants and activators known to those skilled in the art.

The vulcanisation activators that are particularly effective are conventional zinc compounds and in particular ZnO, ZnCO₃, zinc salts of saturated or unsaturated fatty acids containing from 8 to 18 carbon atoms, such as zinc stearate, which are preferably formed in situ in the elastomeric composition by ZnO and fatty acid, as well as BiO, PbO, Pb₃O₄, PbO₂, or mixtures thereof.

Preferably the quantity of vulcanisation activator with conventional zinc base, present in the vulcanisable elastomeric composition for obtaining tyre components, can be suitably reduced as a function of the quantity of zinc compound already introduced therein for incorporation of the present co-vulcanising composition c), in the form of complex c2) of the zinc itself with (di)thiodipropionic acid of formula (I).

The vulcanisation accelerants that are commonly used can be selected from among: dithiocarbamates, guanidine, thiourea, thiazoles, sulfenamides, thiurams, amines, xanthates or mixtures thereof.

The vulcanisable elastomeric composition for obtaining tyre components can comprise methylene donor compounds, methylene acceptor compounds, activators, accelerants, adhesion promoters and co-adjuvants of vulcanisation or other commonly used additives, selected on the basis of the specific application to which the composition is intended. For example, the following can be added to said materials: antioxidants, anti-agent agents, plasticisers, adhesives, anti-ozone agents, modifying resins, or mixtures thereof.

Said additives can possibly be present in the mixture in quantities generally from 2 to 4 phr of a methylene donor compound, from 1 to 3 phr of a methylene acceptor compound, from 5 to 10 phr of an activator, from 1 to 3 phr of an accelerant, from 0 to 3 phr of an antioxidant, from 0 to 2 phr of adhesion promoter, and from 0 to 2 phr of vulcanisation co-adjuvant, more preferably from 2.5 to 3.5 phr of a methylene donor compound, from 1.3 to 2.0 phr of a methylene acceptor compound, from 6 to 8 phr of an activator, from 1.1 to 2 phr of an accelerant, from 1.5 to 2,5 phr of an antioxidant, from 0.5 to 1.5 phr of an adhesion promoter, and from 0.8 to 1.8 phr of vulcanisation co-adjuvant.

In particular, for the purpose of improving the processability, a plasticiser can be added to said vulcanisable elastomeric composition for obtaining tyre components. Generally, the plasticiser is selected from among the following: mineral oils, vegetable oils, synthetic oils or mixtures thereof, such as aromatic oil, naphthenic oil, phthalates, soy oil or mixtures thereof. The quantity of plasticiser is generally comprised between 0 phr and about 70 phr, preferably between about 5 phr and about 30 phr.

The vulcanisable elastomeric composition can be prepared by mixing together the at least one elastomeric polymer P₁, the reinforcement filler a), the vulcanising agent b) and the co-vulcanising composition c), with other additives possibly present according to the techniques known in the art. The mixing can for example be executed by using an open mixer of "open-mill" type or an internal mixer of the type with tangential rotors (Banbury®) or with copenetrating rotors (Intermix™), or in continuous mixers of Ko-Kneader™ type or of the twin-screw or multi-screw type or in an extruder with planetary rollers.

The elastomeric composition comprising the present co-vulcanising composition c), once vulcanised, generally has an increase of the value of dynamic elastic shear modulus (G') at 70°C with respect to the reference composition, not comprising the present co-vulcanising composition c), of at least 10%, preferably at least 15%, an increase of the CA1 value (ring traction) of at least 20%, preferably at least 30%, and an increase of the maximum torque value MH (MDR) of at least 15%, preferably at least 20%.

By zinc complex c2) obtained by interaction between the components c3) and C4), it is intended the salts, the complexes, the adducts, and generally the possible products that can be formed via reaction of exchange, acid-base or complexing of a zinc salt, oxide or hydroxide with a lower (di)thiodicarboxylic acid of formula (I).

The components c3) and c4) are preferably made to interact by mixing, preferably in the presence of the elastomeric polymer P₂, and possibly of the plasticiser c5). Preferably the mixing is carried out at hot temperatures, higher than the ambient temperature (20 °C - 25°C), preferably higher than 40 °C. Preferably the mixing is carried out at a temperature lower than 1.30°C.

The zinc compound c3) is generally a zinc salt, oxide or hydroxide, preferably selected from among zinc carbonate, zinc bicarbonate, zinc hydroxide and zinc oxide, more preferably zinc oxide.

Generally c3) and c4) are placed to interact in a weight ratio comprised between 1:5 e 5:1, preferably between 2:1 and 1:2, more preferably in a weight ratio of about 1:1.

Preferably the zinc compound c3) is characterised by a high surface area, more preferably is zinc oxide with high surface area.

The surface area of the zinc compound c3), preferably of the zinc oxide, is preferably greater than 40 m²/g, more preferably greater than 50 m²/g, still more preferably greater than 70 m²/g.

One example of a zinc oxide suitable for the present composition c) is Activox R80P sold by Innovadex, with surface area equal to 80 m²/g.

Lower (di)thiodicarboxylic acid c4) is a compound of formula (I)

HOOC-CHR-CHR₁-S₍ₙ₎-CHR₂-CHR₃-COOH (I)

wherein
n represents an integer number selected from among 1 and 2;
R, R₁, R₂, R₃, equal or different from each other, are selected from among H, CH₃ and C₂H₅.

Preferably in the compound of formula (I), R, R₁, R₂, R₃, are selected from among H and CH₃, more preferably are equal to each other and represent H, still more preferably R, R₁, R₂, R₃, are all H and n=2 (ADTDP), e.g. the ADTDP sold by Sigma Aldrich.

For the purpose of improving the processability of the co-vulcanising composition c), a plasticiser c5) can be added that is generally selected from among the following: mineral oils, vegetable oils, synthetic oils or mixtures thereof, such as aromatic oil, naphthenic oil, phthalates, soy oil or mixtures thereof, preferably a paraffin oil with controlled aromatic content such as MES or TDAE or TRAE oil (acronyms: Mild Extraction Solvate, Treated Distillate Aromatic Extract, or Treated Residual Aromatic Extract), sold by Shell.

The quantity of plasticiser is generally comprised between 0 phr and about 70 phr, preferably between 0.1 and 20 phr, more preferably between 5 and 15 phr.

Preferably, a MES or TDAE oil is used as plasticiser agent.

In a preferred embodiment, the co-vulcanising composition c) comprises
c1) at least one elastomeric polymer P₂,
c2) at least one zinc complex obtained by interaction between:
   c3) from 40 to 70 phr of at least one zinc compound,
   c4) from 40 to 70 phr of at least one (di)thiodicarboxylic acid of formula (I), and possibly,
   c5) from 0.1 to 20 phr of at least one plasticiser.

In a preferred embodiment, the co-vulcanising composition c) comprises
c1) at least one elastomeric polymer P₂,
c2) at least one zinc complex obtained by interaction between:
   c3) from 50 to 60 phr of at least one zinc compound,
   c4) from 50 to 60 phr of at least one (di)thiodicarboxylic acid of formula (I), and possibly,
   c5) from 0.1 to 20 phr, preferably from 5 to 15 phr of at least one plasticiser.

In a preferred embodiment, the co-vulcanising composition c) comprises
c1) at least one elastomeric polymer P₂,
c2) at least one zinc complex obtained by interaction between:
   c3) from 20 to 80 phr of at least one zinc compound selected from among zinc carbonate, zinc bicarbonate, zinc hydroxide and zinc oxide, preferably zinc oxide,
   c4) from 20 to 80 phr of at least one (di)thiodicarboxylic acid of formula (I), wherein R, R₁, R₂, R₃, equal or different from each other, are selected from among H and CH₃, preferably all are H, more preferably all are H and n=2 and, possibly,
   c5) from 0.1 to 20 phr of at least one plasticiser, preferably a MES or TDAE oil.

In a preferred embodiment, the co-vulcanising composition c) comprises
c1) at least one elastomeric polymer P₂,
c2) at least one zinc complex obtained by interaction between:
   c3) from 40 to 70 phr of at least one zinc compound selected from among zinc carbonate, zinc bicarbonate, zinc hydroxide and zinc oxide, preferably zinc oxide,
   c4) from 40 to 70 phr of at least one (di)thiodicarboxylic acid of formula (I), wherein R, R₁, R₂, R₃, equal or different from each other, are selected from among H and CH₃, preferably all are H, more preferably all are H and n=2 and, possibly,
   c5) from 0.1 to 20 phr of at least one plasticiser, preferably a MES or TDAE oil.

In a preferred embodiment, the co-vulcanising composition c) comprises
c1) at least one elastomeric polymer P₂,
c2) at least one zinc complex obtained by interaction between:
   c3) from 50 to 60 phr of at least one zinc compound selected from among zinc carbonate, zinc bicarbonate, zinc hydroxide and zinc oxide, preferably zinc oxide,
   c4) from 50 to 60 phr of at least one (di)thiodicarboxylic acid of formula (I), wherein R, R₁, R₂, R₃, equal or different from each other, are selected from among H and CH₃, preferably all are H, more preferably all are H and n=2 and, possibly,
   c5) from 5 to 15 phr of at least one plasticiser, preferably a MES or TDAE oil.

In a particularly preferred embodiment, the co-vulcanising composition c) comprises
c1) a copolymer of styrene/1,3-butadiene P₂,
c2) at least one zinc complex obtained by interaction between:
   c3) from 50 to 60 phr of zinc oxide with surface area greater than 70 m²/g,
   c4) from 50 to 60 phr of ADTDP and,
   c5) from 5 to 15 phr of a plasticiser, preferably of a MES or TDAE oil.

A further aspect of the present invention relates to the precursor d) of the co-vulcanising composition c) which comprises
c1) at least one elastomeric polymer P₂,
c3) from 20 to 80 phr of at least one zinc compound,
c4) from 20 to 80 phr of at least one lower (di)thiodicarboxylic acid of formula (I)

   HOOC-CHR-CHR₁-S(ₙ)-CHR₂-CHR₃-COOH (I)

   wherein
   n represents an integer number selected from among 1 and 2;
   R, R₁, R₂, R₃, equal or different from each other, are selected from among H, CH₃ and C₂H₅, and, possibly,
c5) at least one plasticiser.

In one embodiment, the precursor d) of the co-vulcanising composition c) comprises
c1) at least one elastomeric polymer P₂,
c3) from 40 to 70 phr of at least one zinc compound,
c4) from 40 to 70 phr of at least one (di)thiodicarboxylic acid of formula (I), and possibly,
c5) from 0.1 to 20 phr of at least one plasticiser.

In one embodiment, the precursor d) of the co-vulcanising composition c) comprises
c1) at least one elastomeric polymer P₂,
c3) from 50 to 60 phr of at least one zinc compound,
c4) from 50 to 60 phr of at least one (di)thiodicarboxylic acid of formula (I), and possibly,
c5) from 0.1 to 20 phr of at least one plasticiser.

In one embodiment, the precursor d) of the co-vulcanising composition c) comprises
c1) at least one elastomeric polymer P₂,
c3) from 20 to 80 phr of at least one zinc compound selected from among zinc carbonate, zinc bicarbonate, zinc hydroxide and zinc oxide, preferably zinc oxide,
c4) from 20 to 80 phr of at least one (di)thiodicarboxylic acid of formula (I), wherein R, R₁, R₂, R₃, equal or different from each other, are selected from among H and CH₃, preferably all are H, more preferably all are H and n=2 and, possibly,
c5) from 0.1 to 20 phr of at least one plasticiser, preferably a MES or TDAE oil.

In one embodiment, the precursor d) of the co-vulcanising composition c) comprises
c1) at least one vulcanisable elastomeric polymer P₂,
c3) from 40 to 70 phr of at least one zinc compound selected from among zinc carbonate, zinc bicarbonate, zinc hydroxide and zinc oxide, preferably zinc oxide,
c4) from 40 to 70 phr of at least one (di)thiodicarboxylic acid of formula (I), wherein R, R₁, R₂, R₃, equal or different from each other, are selected from among H and CH₃, preferably all are H, more preferably all are H and n=2 and, possibly,
c5) from 0.1 to 20 phr of at least one plasticiser, preferably a MES or TDAE oil.

In one embodiment, the precursor d) of the co-vulcanising composition c) comprises
c1) at least one elastomeric polymer P₂,
c3) from 50 to 60 phr of at least one zinc compound selected from among zinc carbonate, zinc bicarbonate, zinc hydroxide and zinc oxide, preferably zinc oxide,
c4) from 50 to 60 phr of at least one (di)thiodicarboxylic acid of formula (I), wherein R, R₁, R₂, R₃, equal or different from each other, are selected from among H and CH₃, preferably all are H, more preferably all are H and n=2 and, possibly,
c5) from 5 to 15 phr of at least one plasticiser, preferably a MES or TDAE oil.

The elastomeric polymer P₂ used in the precursor d) and/or in the present co-vulcanising composition c) is selected from among the diene elastomeric polymers defined above.

Preferably, in the precursor d) of the cho-vulcanising composition c), the elastomeric polymer P₂ is selected from among cis-1,4-polyisoprene (natural or synthetic, preferably natural rubber), 3,4-polyisoprene, polybutadiene (in particular polybutadiene with a high content of 1,4-cis), possibly halogenated copolymers of isoprene/isobutene, copolymers of 1,3-butadiene/acrylonitrile, copolymers of styrene/1,3-butadiene, copolymers of styrene/isoprene/1,3-butadiene, copolymers of styrene/1,3-butadiene/acrylonitrile, or mixtures thereof, more preferably it is a copolymer of styrene/1,3-butadiene.

In the preparation of the co-vulcanising composition c), preferably the employed elastomeric polymer P₂ is provided via polymerisation in emulsion, such as E-SBR1500 sold by Lanxess.

The co-vulcanising composition c) is obtainable by means of mixing the components of a suitable precursor d). During this mixing step, the zinc compound c3) and the (di)thiodicarboxylic acid c4) interact and form a stable product, the complex c2), which through heating, in normal mixing and calendering conditions, no longer releases the volatile irritating by-products, maintains the cross-linking properties, and if incorporated in elastomeric compositions for rubber-covering reinforcement elements, also has high adhesion to the reinforcement elements, in particular metal reinforcement elements.

Therefore, a further aspect of the present invention relates to a process for preparing a co-vulcanising composition c) comprising
- supplying a mixer with the precursor d) comprising
   c1) at least one elastomeric polymer P₂,
   c3) from 20 to 80 phr of at least one zinc compound,
   c4) from 20 to 80 phr of at least one lower (di)thiodicarboxylic acid of formula (I)

      HOOC-CHR-CHR₁-S₍ₙ₎-CHR₂-CHR₃-COOH (I)

      wherein
      n represents an integer number selected from among 1 and 2;
      R, R₁, R₂, R₃, equal or different from each other, are selected from among H, CH₃ and C₂H₅, and possibly
   c5) at least one plasticiser, given that the components c1), c3), c4) and, possibly, c5) are supplied simultaneously or in sequence,
- mixing said components at a molten mass temperature lower than 130°C,
- removing the co-vulcanising composition c).

The co-vulcanising composition c) is generally prepared by mixing the components c1), c3), c4) and possibly c5) present together in the precursor d) or added in sequence, in an open mixer of "open-mill" type, or an internal mixer of the type with tangential rotors (Banbury®) or with copenetrating rotors (Intermix™), or in continuous mixers of Ko-Kneader™ type or of twin-screw or multi-screw type or in an extruder with planetary rollers, preferably in a continuous mixer.

The temperature is generally controlled, especially to avoid the decomposition of the (di)thiodipropionic acid in the addition step. Preferably the temperature of the melt does not exceed 130°C in any of the mixing steps, and preferably (di)thiodipropionic acid is added in a lower-temperature zone of the mixer, preferably lower than 100°C, more preferably lower than 60°C.

Generally the mixing time varies as a function of the mass, of the specific ingredients and concentrations, of the mixer type, of the wing type etc., but generally is lower than 10 minutes, typically comprised between 30 seconds and 4 minutes according to the plant and the used conditions.

The mixing energy is generally comprised between 50 and 300 kW/h. The addition of the components c1), c3), c4) and possibly c5) can be simultaneous, in the form of precursor d) (batch production), possibly with pre-processing of the polymer and subsequent addition of the other ingredients, or in sequence (continuous production), in particular with addition and softening of the ingredient c1), the polymer P₂ in a first zone preferably at the temperature of about 80 °C and, subsequently, introducing the other ingredients c3), c4) and finally possibly c5) at lower temperatures, preferably about 40°C.

The conditions of temperature, energy and mixing times can vary slightly as a function for example of the type of components used, of the quantity thereof, of the mixer type, especially of the profile of the rotor wings etc. but generally their definition falls within the capacity, knowledge and normal experimental activity of the man skilled in the art. The mixing step is generally continued until a uniform mass is produced with Mooney ML (1+4) viscosity comprised between 60 and 100, preferably about 80.

Without wishing to be tied to any particular theory, the Applicant deems that following the energetic thermomechanical treatment of the ingredients c1) - c5), the (di)thiodicarboxylic acid is effectively brought into contact with the surface of the finely dispersed zinc oxide and interacts therewith at the molecular level, with the formation of products (adducts, salts, complexes). These products are sufficiently stable so as to no longer release, into the mixer itself and in the possible subsequent step into the calender, the irritating by-products of decomposition of the acid, and simultaneously they maintain the co-vulcanising activity typical of the compounds itself.

The formation of the adduct can be verified via NMR and IR and possibly quantified by using the specific signals of the carboxyl group complexed with the zinc oxide.

The stablisation effect exerted by the components of the co-vulcanising composition c), in particular by the zinc compound on (di)thiodicarboxylic acid, was verified by the Applicant through thermal decomposition (desorption) studies of the co-vulcanising composition c) comprising the ADTDP:ZnO complex with respect to pure ADTDP and ADTDP supported on silica: for gradual heating up to 160°C, only in the case of the co-vulcanising composition c) comprising ADTDP:ZnO were there no detectable emissions of acrylic acid and 3-mercaptopropionic acid for the entire temperature interval.

Therefore, the present co-vulcanising composition c) is further characterised by releasing the compounds of formula (I) and their volatile by-products derived from the compounds of formula (I), in particular from ADTDP, in quantities lower than the sensitivity (LOD) of the employed detection instrument (GC-MS) when said composition is subjected to heating to the temperature of 160°C, according to the method described in the experimental part.

The co-vulcanising composition c), once the mixing has terminated, can be advantageously reduced into granules, e.g. extruded as a semi-finished product in sheet or roll form, then cut into flakes to be added to the other components in the preparation of the vulcanisable elastomeric composition.

Another advantage of the co-vulcanising composition c) is that it no longer has the stickiness shown by ADTDP and other (di)thiodicarboxylic acids (I) towards the wings of the rotors in the mixers and on the rolls of the calender, when DTDP acid is separately added in non-complexed form. Indeed, the zinc complexes c2) obtainable via interaction of these acids c4) of formula (I) with the zinc compounds c3) are well-dispersed in the polymer phase, without adhering to the walls and to the rotors of the mixers, with clear advantages in terms of uniformity and efficiency of the mixing process.

In addition, the adhesivity of the rubber-covered fabric to the rolls of the calender is considerably reduced, during the calendering of the reinforced semi-finished products.

The zinc compounds (c3) are advantageously adapted to be used as stabilisers of lower (di)thiodicarboxylic acids of formula (I) (c4) in vulcanisable elastomeric compositions for tyres.

Preferably in such use, the zinc compound c3) is zinc oxide and dithiodicarboxylic acid c4) is dithiodipropionic acid.

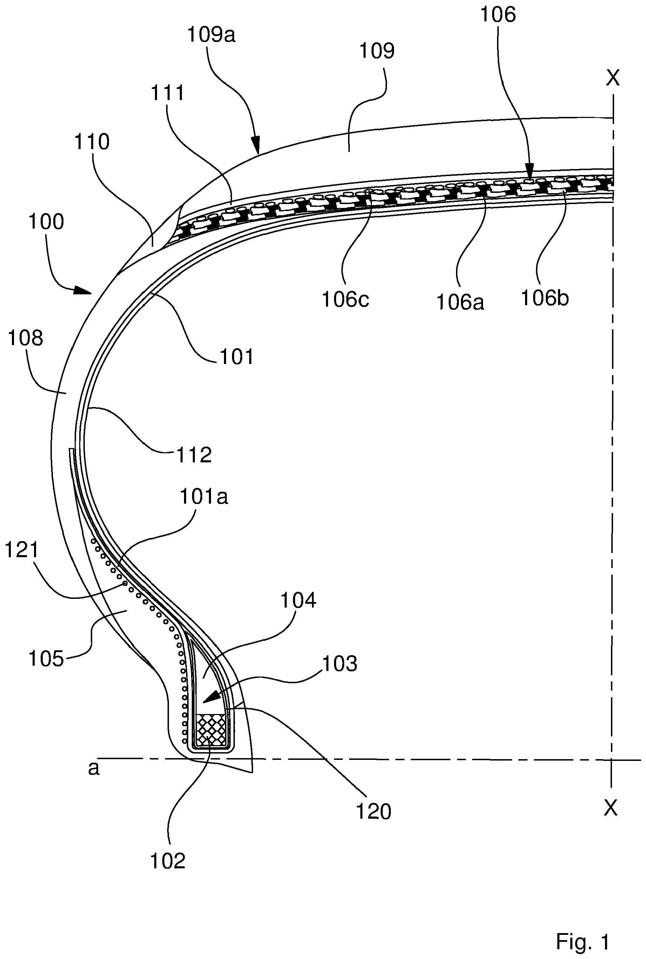

The description of a tyre will be set forth hereinbelow with reference to figure 1, provided only as a non-limiting example.

Figure 1 illustrates, in radial semi-section, a tyre for vehicle wheels.

In Figure 1, "a" indicates an axial direction and "X" indicates a radial direction, in particular with X-X the line of the equatorial plane is indicated. For the sake of simplicity, Figure 1 only shows a portion of the tyre, the remaining non-represented portion being identical and symmetrically arranged with respect to the equatorial plane "X-X".

The tyre 100 for four-wheel vehicles comprises at least one carcass structure, comprising at least one carcass layer 101 having respectively opposite terminal zones engaged with respective anchoring annular structures 102, termed bead cores, possibly associated with a bead filler 104. The zone of the tyre comprising the bead core 102 and the filler 104 forms a bead structure 103 intended to anchor the tyre on a corresponding mounting rim, not illustrated.

The carcass structure is usually of radial type, i.e. the reinforcement elements of the at least one carcass layer 101 are situated on planes comprising the rotation axis of the tyre and substantially perpendicular to the equatorial plane of the tyre. Said reinforcement elements are generally constituted by textile cords, e.g. rayon, nylon, polyester (for example polyethylene naphthalate (PEN)). Each bead structure is associated with the carcass structure by means of backward folding of the opposite lateral edges of the at least one carcass layer 101 around the anchoring annular structure 102 in a manner so as to form the so-called flaps of the carcass 101a as illustrated in Figure 1.

In one embodiment, the coupling between the carcass structure and the bead structure can be provided by means of a second carcass layer (not represented in Figure 1) applied in an axially external position with respect to the first carcass layer.

An anti-abrasive strip 105 obtained with elastomeric composition is arranged in an external position of each bead structure 103.

The carcass structure is associated with a belt structure 106 comprising one or more belt layers 106a, 106b situated in radial superimposition with respect to each other and with respect to the carcass layer, having typically textile and/or metal reinforcement cords incorporated within a layer of vulcanised elastomeric composition obtained by vulcanising a vulcanisable elastomeric composition as previously described.

The vulcanisable elastomeric composition comprises at least one elastomeric polymer P₁, at least one reinforcement filler a), at least one vulcanising agent b), and a co-vulcanising composition c) obtained by mixing
c1) at least one elastomeric polymer P₂,
c2) at least one zinc complex obtained by interaction between
c3) from 20 to 80 phr with respect to P₂ of at least one zinc compound and
C4) from 20 to 80 phr with respect to P₂ of at least one lower (di)thiodicarboxylic acid of formula (I)

   HOOC-CHR-CHR₁-S (n) -CHR₂-CHR₃-COOH (I)

   wherein
   n represents an integer number selected from among 1 and 2;
   R, R₁, R₂, R₃, equal or different from each other, are selected from among H, CH₃ and C₂H₅.

Such reinforcement cords can have crossed orientation with respect to a circumferential extension of the tyre 100. By "circumferential" direction it is intended a direction generically directed along the rotation direction of the tyre.

In a radially more external position with respect to the belt layers 106a,106b, at least one zero degree reinforcement layer 106c can be applied, commonly known as "0° belt", which generally incorporates a plurality of reinforcement cords, typically metal cords, oriented in a substantially circumferential direction, thus forming an angle of only a few degrees (e.g. an angle between about 0° and 6°) with respect to a direction parallel to the equatorial plane of the tyre, and coated with a vulcanised elastomeric composition obtained by vulcanising a vulcanisable elastomeric composition comprising said co-vulcanising composition c).

In a radially external position with respect to the belt structure 106, a tread band 109 is applied made of elastomeric mixture, like other semi-finished products forming the tyre 100.

Respective sidewalls 108 made of elastomeric mixture are also applied in axially external position on the lateral surfaces of the carcass structure, each being extended from one of the lateral edges of the tread 109 up to the respective bead structure 103.

In a radially external position, the tread band 109 has a rolling surface 109a intended to come into contact with the ground. Circumferential grooves, which are connected by transverse notches (not represented in Figure 1) in a manner so as to define a plurality of blocks of various shape and size distributed on the rolling surface 109a, are generally made in this surface 109a, which for the sake of simplicity is represented smooth in Figure 1.

An underlayer 111 can be arranged between the belt structure 106 and the tread band 109.

A strip constituted by elastomeric composition 110, commonly known as "mini-sidewall", can possibly be present at the zone of connection between the sidewalls 108 and the tread band 109, this mini-sidewall being generally obtained by means of co-extrusion with the tread band 109 and allowing an improvement of the mechanical interaction between the tread band 109 and the sidewalls 108. Preferably the end portion of the sidewall 108 directly covers the lateral edge of the tread band 109.

In the case of tyres without air chamber, a rubber layer 112, generally known as "liner", which provides the necessary impermeability to the inflation air of the tyre, can also be provided in a position that is radially internal with respect to the carcass layer 101.

The rigidity of the tyre sidewall 108 can be improved by providing the bead structure 103 with a reinforcement layer 120 generally known as a "flipper" or additional strip-like insert.

The flipper 120 is a reinforcement layer that is wound around the respective bead core 102 and the bead filler 104 in a manner so as to at least partly surround them, said reinforcement layer being arranged between the at least one carcass layer 101 and the bead structure 103. Usually, the flipper is in contact with said at least one carcass layer 101 and said bead structure 103.

The flipper 120 typically comprises a plurality of textile cords incorporated in a layer of vulcanised elastomeric composition obtained by vulcanising a vulcanisable elastomeric composition, as described above.

The tyre bead structure 103 can comprise a further protection layer that is generally known with the term "chafer" 121 or protection strip and that has the function of increasing rigidity and integrity of the bead structure 103.

The chafer 121 usually comprises a plurality of cords incorporated in a layer of vulcanised elastomeric composition obtained by vulcanising a vulcanisable elastomeric composition, as previously described. Such cords are generally made of textile materials (e.g. aramide or rayon) or of metal materials (e.g. steel cords).

According to a non-illustrated embodiment, the tyre can be a tyre for wheels of motorcycles.

The tyre for motorcycles comprises a carcass structure including at least one carcass ply, made of elastomeric material and comprises a plurality of reinforcement elements arranged parallel to each other.

The carcass ply is engaged, by means of opposite circumferential edges thereof, to at least one bead structure.

In particular, the opposite lateral edges of the carcass ply are turned upward around anchoring annular structures, termed bead cores.

Typically a belt structure is circumferentially applied on the carcass structure, in a radially external position; such belt structure comprises one or more belt layers situated in radial superimposition with respect to each other and with respect to the carcass layer, having metal or textile reinforcement cords.

The textile and/or metal cords of the belt layer are incorporated in a layer of vulcanised elastomeric composition obtained by vulcanising a vulcanisable elastomeric composition comprising at least
one elastomeric polymer P₁,
one reinforcement filler a)
one vulcanising agent b) and
one co-vulcanising composition c).

A tread band is circumferentially superimposed on the belt structure; on such tread band, following a moulding operation executed simultaneously with the vulcanisation of the tyre, longitudinal and/or transverse recesses are typically obtained, arranged to define a desired tread design.

The tyre for motorcycles can comprise a pair of sidewalls applied laterally on opposite sides to said carcass structure.

Preferably the tyre for motorcycles has a cross section marked by a high transverse curvature.

According to a non-illustrated embodiment, the tyre can be a tyre for wheels of heavy transport vehicles, such as trucks, buses, trailers, vans, and generally for vehicles in which the tyre is subjected to a high load.

Preferably, one such tyre is adapted to be mounted on rims having diameter equal to or greater than 17.5 inches for directional wheels or trailer wheels. A heavy transport vehicle is for example a vehicle of the categories M2, M3, N2, N3, 02, 03 and 04 according to "ECE Consolidated Resolution of the Construction of vehicles (R.E. 3), Annex 7, Classification and definition of power driven vehicles and trailers", or of the categories M3, N2, N3, 03, 04 according to the "ETRTO Engineering design information" (edition 2010), "General Information" section, pp. G15 and G16, "International codes for wheeled vehicle classification as UN/ECE 29/78 and Directive 2003/37" chapter. The heavy transport vehicle category comprises trucks, tractors-trailers, lorries, buses, and similar vehicles.

The tyre for wheels of heavy transport vehicles comprises at least one carcass ply, whose opposite lateral edges are associated with respective bead structures, the so-called bead, comprising an anchoring annular structure, termed bead core, and at least one bead filler. The association between said at least one carcass ply and said bead structure is typically obtained by turning the opposite lateral edges of said at least one carcass ply upward around said anchoring annular structure and said at least one bead filler in a manner so as to form a carcass flap.

Said at least one carcass ply generally comprises a plurality of carcass ply reinforcement elements arranged substantially parallel to each other and at least partly coated by a layer of elastomeric material. These carcass ply reinforcement elements, in particular in the case of truck tyres, usually comprise metal cords, preferably made of steel.

A belt structure is applied in a radially external position with respect to said at least one carcass ply.

The belt structure comprises at least two radially superimposed load-bearing belt layers, which incorporate a plurality of belt reinforcement elements, typically metal cords, preferably made of steel. The belt structure can also comprise a zero degree reinforcement layer, applied for example in a radially external position with respect to the second load-bearing belt layer.

The metal cords used in the layers of the belt structure, and in particular those used in the load-bearing belt layers, comprise a plurality of wires.

The wires of the metal cords used in the belt structure (and typically also in other reinforcement layers of the tyre) are preferably NT (normal tensile), HT (high tensile), SHT (super high tensile) or UHT (ultra high tensile) steel wires.

Typically, such steel wires have a carbon content of less than about 1%. Preferably, the carbon content is greater than or equal to about 0.7%. The wires are typically coated with brass or another corrosion-resistant coating (e.g. Zn/Mn).

A tread band is applied circumferentially in a radially external position with respect to said belt structure.

The rigidity of the tyre sidewall for heavy vehicles can be improved by providing the tyre bead structure with a reinforcement layer generally known as a "flipper" or additional strip-like insert.

The flipper typically comprises a plurality of metal or textile cords incorporated in a cross-linked elastomeric material.

The tyre bead structure for heavy vehicles can comprise a further protection layer which is generally known with the term "chafer" or protection strip and which has the function of increasing rigidity and integrity of the bead structure.

The chafer usually comprises a plurality of cords incorporated in an elastomeric material which can be made of metal materials (e.g. steel cord).

One or more of the structures reinforced with the textile and/or metal reinforcement elements of the aforesaid tyres for heavy vehicles, preferably the carcass structure and/or the belt structure and/or the flipper and/or the chafer, comprise a vulcanised elastomeric composition obtained by vulcanising a vulcanisable elastomeric composition comprising the co-vulcanising composition c), as previously described.

In the following experimental part, for non-limiting and exemplifying purposes, the description is reported of an example of preparation of the co-vulcanising composition c) and its incorporation in elastomeric compositions of tyre components according to the present invention.

### Example 1

### Preparation of the co-vulcanisin composition c) (MB1)

The components reported in the following table 1

**Table 1**

| | Component | Commercial name, supplier, specifications | phr |
|---|---|---|---|
| c1 | Elastomeric polymer P₂ | SBR1500 emulsion (Lanxess) | 100 |
| c3 | Zinc oxide | Activox R80P, 80 m²/g surface area (Innovadex) | 55 |
| c4 | ADTDP | Dithiodipropionic acid (stigma-Aldrich) | 55 |
| c5 | Plasticiser | MES oil (Shell) | 10 |

were introduced into a co-rotating twin-screw extruder (Maris TM4OHT, Maris TIV170HT) with mixing screw, flow rate of 100 kg/h, at 140 rpm having three zones with different thermal profile: 1) zone of introduction and softening of the polymer (80°C), 2) zone of entrance of ADTDP, zinc oxide and plasticiser (50°C) and 3) containment zone (40°C).

The previously-granulated elastomeric polymer P₂ was fed to the machine inlet of the twin-screw extruder and heated to about 60-80°C. ADTDP, zinc oxide and, at the end of the machine, plasticiser were added. The specific energy was about 0.2 - 0.4 kWh/kg.

The temperature of the melt did not exceed 130°C and the stay time in the screw was about 60 seconds.

The co-vulcanising composition c) was then granulated for use in the subsequent mixing step.

### Preparation of ADTDP composition dispersed on silica (MB2)

### (comparative)

The same components reported in Table 1, except for the ZnO which is substituted by silica of 1165 MP (Rhodia) type, were used for preparing a second co-vulcanising composition (MB2) following the same modes of preparation of the MB1.

### Evacuation of the thermal behaviour

The Applicant studied the behaviour after heating the original mixtures MB1, MB2 thus obtained, of pure ADTDP samples and of an elastomeric composition comprising MB1 according to the invention COM1, in particular verifying the volatility of ADTDP and its thermal decomposition by-products as a function of the temperature and matrix type. The tests were conducted with GC-MS equipped with thermal elution system and liquid nitrogen trap. Each sample was heated for 15' to the indicated temperature. The volatile substances were trapped and subsequently injected in the GC-MS apparatus in order to be recognised. The qualitative-quantitative analysis of the released substances was conducted with the GC-MS technique: only the signals above the sensitivity limit (LOD) of the instrument were taken under consideration, and for each of the eluted substances, a specific ion from the mass fragmentation spectrum was taken as a marker.

At the MS detector, three main substances were recognised: ADTDP and two decomposition by-products thereof, thiodipropionic acid (ATP) (3 mercaptopropionic acid) and acrylic acid (AA). For each of these, a characteristic ion was selected from the mass fragmentation spectrum as a marker, in particular the mass ion 210 for ADTDP, 106 for ATP and 72 for AA.

As is clear from Table 2, ADTDP already released AA at 120°C and ATP at 150°C, in accordance with the irritating effect observed during the calendering of the cords with binding elastomeric compositions comprising ADTDP.

From the collected data, it was also shown that the silica (MB2) was not very effective as a stabiliser, only causing an increase of the release temperature of the by-products, while MB1 in accordance with the present invention, in which ADTDP was made to pre-react with the zinc oxide, completely prevented such phenomenon. The absence of irritating emissions at all tested temperatures was also confirmed on the elastomeric composition COM1 (described in Example 2) comprising MB1 according to the invention.

**Table 2**

| Sample | Heating temperature (for 15') | Released substance | Release temperature °C |
|---|---|---|---|
| pure ADTDP | 120°C; 140°C; 150°C; 160°C | AA | from 120°C, strong peak at 160°C |
| | | ATP | from 150°C |
| | | ADTDP | 160°C |
| MB1 ZnO invention | 140°C; 150°C; 160°C | AA | No detectable release |
| | | ATP | No detectable release |
| | | ADTDP | No detectable release |
| MB2 silica comparative | 140°C; 150°C | AA | Strong peak from 140°C |
| | | ATP | from 140°C |
| | | ADTDP | from 150°C |
| COM1 invention | 140°C; 150°C; 160°C | | No release of AA ATP ADTP for all temperatures |

The considerable thermal stability of the co-vulcanising composition c) of the present invention and of the compositions which incorporate it are clearly seen from these tests.

Presented hereinbelow are the results of tests executed on cross-linkable elastomeric mixtures prepared according to the present invention and according to conventional methods.

The cross-linkable elastomeric mixtures were subjected to rheometric analysis MDR (according to the ISO 6502 standard) by using an Alpha Technologies rheometer, type MDR2000, and the Mooney ML(1+4) viscosity was measured at 100°C according to the ISO 289/1 standard. The tests were carried out at 170°C for 20 minutes at an oscillation frequency of 1.66 Hz (100 oscillations per minute) and an oscillation amplitude of ± 0.5°, measuring the time necessary to attain an increase of two rheometric units (TS2) and the time necessary to reach respectively 30% (T30), and 90% (T90) of the final torque value. The maximum torque value MH and the minimum torque value ML were also measured.

The static mechanical properties according to the ISO 37:2005 standard were measured at 23°C and at 70°C (the following were measured: the load at various elongation level, 50% - 100%, termed in sequence CA05 - CA1; the rupture load CR and the rupture elongation AR) on samples of the abovementioned elastomeric materials, vulcanised at 170°C for 10 minutes. The traction tests were carried out on specimens with rectilinear axis of the Dumb-bell type.

The dynamic mechanical properties G' , G" and Tan delta were also measured by using a RPA Alpha Technologies device in shear mode. A sample of green elastomeric composition of the mixtures COM1 and COM2, COM3, COM4 and COM5 in disk form (volume = 5 cm³) was vulcanised in a first step inside the instrument itself (for 10 minutes at 170°C) and then subjected to the measurement of the dynamic elastic shear modulus (G') at 70°C temperature, 10 Hz frequency, 0.4% to 10% deformation. The dynamic mechanical properties are expressed in terms of dynamic elastic shear modulus (G') and Tan delta (loss factor) values. The Tan delta value was calculated as the ratio between the dynamic viscous shear modulus (G") and the dynamic elastic shear modulus (G').

For other samples (indicated hereinbelow as COM4 and COM5), the dynamic elastic properties were measured with a dynamic dynamometer of servo-hydraulic type in the mode under compression, according to the following process. A specimen of the vulcanised material - obtained by means of punching by the cross-linked elastomeric composition in cylindrical form (length = 25 mm; diameter = 14 mm), statically pre-deformed under compression by 10% with respect to the initial length and maintained at the predetermined temperature (23°C) for the full duration of the test - was subjected to a dynamic sinusoidal deformation having an amplitude of +/- 3.33% with respect to the length under static predeformation, with a frequency of 10 Hz. The dynamic elastic properties were expressed in terms of dynamic elastic modulus (E').

The hardness in IRHD degrees (23°C, and 70°C) was measured according to the ISO 48:2007 standard on samples of the abovementioned elastomeric materials, vulcanised at 170°C for 10 minutes.

The scorch time was measured at 127°C according to the ISO 289-2:1994 standard.

### Example 2

### Preparation of elastomeric compositions (COM) and their properties

The following were prepared, according to conventional mixing techniques: the elastomeric composition comprising the co-vulcanising composition c) (COM1) with ADTDP added by means of the composition MB1 prepared according to example 1, and comparative elastomeric compositions, comprising ADTDP added directly into the mixture, without any pre-reaction with zinc oxide (COM2) or not comprising ADTDP (COM3), as reported in the following Table 3

**Table 3**

| Component (phr) | Commercial name, supplier, specifications | COM1 MB1 | COM2 pure ADTDP | COM3 no ADTDP |
|---|---|---|---|---|
| Elastomeric polymer | SMR GP (Std Malaysian Rubber) | 98.5 | 100 | 100 |
| Reinforcement filler | N220 (carbon black) | 60 | 60 | 60 |
| Vulcanisation coadjuvant | Stearic acid (Chemtrec) | 1.5 | 1.5 | 1.5 |
| Activator | ZnO (Grillo-Werke AG STSA 75) | 6.25 | 7 | 7 |
| Antioxidant | N-(1,3-dimethyl butyl)-N'-phenyl -p-phenylene diamine (6PPD) (Solutia) | 2 | 2 | 2 |
| | ADTDP (pure) | -- | 0.75 | -- |
| | ADTDP (MB1) | 3 | -- | -- |
| Methylene acceptor | resorcinol | 1.5 | 1.5 | 1.5 |
| Adhesion promoter | Manobond 680 | 0.7 | 0.7 | 0.7 |
| Methylene donor | HMMM Hexamethoxy methyl melamine | 3.25 | 3.25 | 3.25 |
| Accelerant | DCBS (N,N'-Dicyclohexyl - 2-benzothiazole sulfenamide) | 1.25 | 1.25 | 1.25 |
| Vulcanising agent | Crystex OT33 AS | 6 | 6 | 6 |

It should be observed that COM1 overall comprises 100 phr of elastomeric polymer and 7 phr of zinc oxide since 1.5 phr of elastomeric polymer and 0.75 phr of zinc oxide are introduced into the mixture through the co-vulcanising composition MB1 described above.

Several properties of these compositions have been measured, before and after vulcanisation.

Reported in the following Table 4 are the relative values measured for the compositions COM1, COM2, reparameterised by setting the corresponding values of the reference composition COM3 to 100:

**Table 4**

| Properties | COM1 invention ADTDP:ZnO (MB1) | COM2 comparative ADTDP in mixture | COM3 comparative no ADTDP |
|---|---|---|---|
| Viscosity ML (1+4) 100°C | 100 | 98 | 100 |
| Dumbbell 23°C | | | |
| CA 0.5 [MPa] | 132 | 130 | 100 |
| CA 1 [MPa] | 138 | 137 | 100 |
| CR [MPa] | 121 | 123 | 100 |
| AR % | 95 | 97 | 100 |
| Dumbbell 70°C | | | |
| CA 0.5 [MPa] | 132 | 132 | 100 |
| CA 1 [MPa] | 138 | 141 | 100 |
| CR [MPa] | 96 | 93 | 100 |
| AR % | 80 | 76 | 100 |
| IRHD hardness | | | |
| IRHD 23°C | 102 | 102 | 100 |
| IRHD 70°C | 106 | 105 | 100 |
| RPA 10' / 170 °C | | | |
| ML [dN m] | 103 | 100 | 100 |
| MH [dN m] | 123 | 125 | 100 |
| T30 [min] | 111 | 111 | 100 |
| T90 [min] | 96 | 98 | 100 |
| G' 70°C (9%) Mpa | 116 | 116 | 100 |
| Tan Delta 70°C (9%) | 95 | 94 | 100 |
| G' 70°C (3%) Mpa | 116 | 116 | 100 |
| T. Delta 70°C (3%) | 95 | 95 | 100 |

From the obtained values, it is seen that the elastomeric compositions had viscosity and hence processability that were entirely comparable.

From the collected data, it is seen that the incorporation of ADTDP, both in MB1 form (COM1) and directly in the comparison composition COM3 (COM2), did not worsen the processability of the composition (viscosity ML comparable for all three compositions) and in both cases actually conferred greater rigidity and hardness to the material, as shown in the shear moduli G' of the elastomeric compositions COM 1 and COM 2.

The high mechanical properties shown by the elastomeric composition COM1 demonstrated that the pre-reaction of ADTDP with zinc oxide that leads to MB1 stabilises the product without compromising the co-vulcanising agent properties and the consequent reinforcement effect on the composition.

From the executed tests, it is observed that the two elastomeric compositions COM1 and COM2 have entirely similar behaviour, demonstrated by comparable parameter values. This is proof of the fact that ADTDP introduced in a mixture as a complex produces, at the rheological-mechanical property level, substantially the same effects of ADTDP introduced directly.

### Example 3

### Rubber-covering of metal cords with elastomeric compositions

Two elastomeric compositions (COM4 according to the invention and comparative COM5) comprising the ingredients listed in Table 5 were prepared according to conventional mixing processes. In particular, in the composition COM4, ADTDP was added by means of the composition MB1 prepared according to example 1:

**Table 5**

| Component (phr) | Commercial name, supplier, specifications | COM4 | COM5 |
|---|---|---|---|
| Elastomeric polymer | STR 20 (natural rubber, Std grade) | 98.5 | 100 |
| Reinforcement filler | Series 2 or 3, ASTM grade, Columbian Chem. (carbon black) | 60 | 60 |
| Vulcanisation coadjuvant | Stearic acid (Chemtrec) | 1.5 | 1.5 |
| Activator | ZnO (Grillo-Werke AG) (STSA 75) | 6.25 | 7 |
| Antioxidant | N-(1,3-dimethyl butyl)-N'-phenyl-p-phenylene diamine (6PPD) (Solutia) | 2 | 2 |
| Co-vulcanising agent | ADTDP (MB1) | 3 | -- |
| Methylene acceptor | Resorcinol (Kraeber & Co) | 1.5 | 1.5 |
| Adhesion promoter | Manobond 680 (OM Group) | 0.7 | 0.7 |
| Methylene donor | HMMM (Hexamethoxy methyl melamine) (Cytec) | 3.25 | 3.25 |
| Accelerant | DCBS (N,N'-Dicyclohexyl -2-benzothiazole sulfenamide) | 1.25 | 1.25 |
| Vulcanising agent | Crystex OT33 AS (Solutia) | 6 | 6 |

It is observed that in the elastomeric composition COM4, ADTDP was introduced as co-vulcanising composition (3 phr) prepared according to example 1. MB1 also brings to the elastomeric composition COM4 0.75 phr of ZnO and about 1.5 phr of elastomeric polymer.

Also for these compositions, the mechanical properties reported in the following Table 6 were measured, reparameterised by setting the values of the reference composition COM5 to 100:

**Table 6**

| Properties | COM4 invention | COM5 comparative no ADTDP |
|---|---|---|
| Viscosity ML (1+4) 100°C | 114 | 100 |
| Dumbbell 23°C | | |
| CA 1 [MPa] | 130 | 100 |
| CR [MPa] | 103 | 100 |
| AR % | 98 | 100 |
| IRHD hardness 23°C | 108 | 100 |
| Density g/mc | 100 | 100 |
| RPA 10' / 170 °C | | |
| ML [dN m] | 127 | 100 |
| MH [dN m] | 132 | 100 |
| TS2 [min] | 96 | 100 |
| T30 [min] | 109 | 100 |
| T90 [min] | 105 | 100 |
| G' 70°C (9%) MPa | 128 | 100 |
| T. Delta 70°C (9%) | 112 | 100 |
| T. Delta 10 Hz 23°C | 110 | 100 |
| E' 10 Hz 23°C MPa | 135 | 100 |
| Scorch MS t5 min | 119 | 100 |

Also in this case, the incorporation of MB1 according to the invention determined a clear increase of the rigidity of the material, as is seen by the values relative to the shear modulus G' (+28%) and dynamic elastic modulus E' (+35%).

The compositions COM4 and COM5 were then used for the rubber-covering in the calender of a standard metal fabric, the 3x0.22HT F110. The processing temperatures of the composition were the following: 110°C upon exiting the pre-processing extruder, 115°C at the supply mill, 110-115°C on the rolls of the calender (selvage). For both compositions COM4 and COM5, during the mixing in the Banbury as well as in the calender, the fumes were extracted and analysed via HPLC-MS, confirming the absence of the irritating volatile products ATP and ADTDP.

The fabrics thus rubber-covered were then subjected to the adhesion test according to the No E12 norm ("Determination of static adhesion to rubber compound") of BISFA (The International Bureau for the standardisation of man-made fibres), in which the steel cords are torn from the vulcanised rubber of the specimen, the forces necessary for the tearing are measured and the adherence loss is determined.

The following Table 7 reports the results of the adhesion test, where a value equal to 100 was assigned to the comparative composition COM5:

**Table 7**

| Test of adhesion on fabric 3x022 F110 (cords/dm) | | COM5 comparative -- | COM4 invention -- |
|---|---|---|---|
| | | | |
| As is | | | |
| Force | N | 100 | 110 |
| Coverage | % | 100 | 100 |
| | | | |

| After 8 days of aging, 65°C 90% RH. | | | |
|---|---|---|---|
| Force | N | 100 | 120 |
| Coverage | % | 100 | 165 |

As can be observed, the adhesion of the composition comprising MB1 according to the invention (COM4) is always greater than the reference composition in terms of force.

With regard to the residual coverage, the elastomeric composition COM4 is initially comparable to the standard mixture COM5 while it becomes decidedly greater after aging.

### Example 4

### Driving performances

The tyres according to the present invention confer improved driving performances to cars.

Tyres were prepared according to Figure 1, containing a rubber-covering of the metal belt fabric of elastomeric composition COM5 (comparison) or of elastomeric composition COM4 (invention).

The tyres having size 245/35 ZR19 were mounted on the front of a Porsche 911 Carrera and tested on a circuit. For the purpose of evaluating the behaviour of the tyre, the tester simulated several characteristic manoeuvres (e.g. change of line, entering into a curve, leaving a curve). Then, the tester evaluated the behaviour of the tyre and assigned a score as a function of the performance thereof during the manoeuvre.

The tests were conducted in extreme driving conditions, which describe the behaviour of the tyre at the adherence limit.

The tester thus executed manoeuvres that an average driver would be forced to make in the case of unexpected and dangerous circumstances: sharp swerving at high speed, sudden lane change in order to avoid obstacle, sudden braking and the like.

The tester evaluated various behaviours, such as the force on the steering wheel when it is sharply rotated; the readiness of insertion, i.e. the behaviour of the tyre upon entering the curve at the limit speed; balancing, i.e. the degree of oversteering or understeering of the vehicle: the yield, i.e. the capacity of the tyre to absorb a strong quick transfer of the load as a consequence of a sudden lane change without excessive deformation and therefore without compromising the stability and controllability of the vehicle; release on a curve, i.e. the capacity of the tyre to attenuate the effects of instability deriving from the sudden release of the accelerator during a curve taken at the limit speed; controllability, i.e. the capacity of the tyre to maintain and/or bring the vehicle back into trajectory after having lost adherence.

Table 8 summarises the score sheet of the tester for the controllability of the tyres. The results of these tests are expressed by means of an evaluation scale that represents the subjective opinion expressed by the tester by means of a points system. The values reproduced in the following table represent an average value from among those obtained in multiple test sessions (6 tests). It must be observed that the value scale ranges from a minimum of 4 to a maximum of 8.

The tyres according to the invention reach an average score of at least 7 in the test of response to swerving, of directional control and stability, generally greater than the values obtained with polymer compositions not comprising the present co-vulcanising composition c).

**Table 8**

| Temp. air = 33°C | COM5 comparative | COM4 invention |
|---|---|---|
| Temp. track = 45°C | | |
| 1. STEERING TESTS | | |
| Response | 6 | 7 |
| Angle | 7 | 7.5 |
| Precision | 6 | 7.5 |
| Information | 7 | 7 |
| Barycentre | 6 | 7 |
| Force | 7 | 7 |

| 2. DIRECTIONAL CONTROL | | |
|---|---|---|
| Rear steering | 6.5 | 7 |
| Rear oscillation | 6.5 | 7 |
| Understeering | 6 | 7 |
| Oversteering | 7 | 7 |
| Load transfer | 7 | 7 |
| Release | 6.5 | 7 |

| 3. STABILITY | | |
|---|---|---|
| Braking linearity | 7 | 7 |
| Acceleration on a curve | 7 | 7 |

The evaluations relative to the steering tests are essentially affected by the behaviour of the front tyres.

The results reported in Table 8 clearly show that the tyre according to the present invention (COM4) had an improved behaviour with respect to the conventional comparison tyre (COM5), in particular it has decidedly improved performances in most of the steering and directional control tests and comparable performances in terms of stability.

## Claims

1. A tyre for vehicle wheels wherein at least one component of said tyre comprises a vulcanised elastomeric composition obtained by vulcanising a vulcanisable elastomeric composition comprising:
at least one elastomeric polymer P₁,
at least one reinforcement filler a),
at least one vulcanising agent b), and
at least one co-vulcanising composition c) obtained by mixing
c1) at least one elastomeric polymer P₂,
c2) at least one zinc complex obtained by interaction between:
c3) from 20 to 80 phr with respect to P₂ of at least one zinc compound, and
c4) from 20 to 80 phr with respect to P₂ of at least one lower (di)thiodicarboxylic acid of formula (I)
HOOC-CHR-CHR₁-S₍ₙ₎-CHR₂-CHR₃-COOH (I)
wherein
n represents an integer number selected from among 1 and 2;
R, R₁, R₂, R₃, equal or different from each other, are selected from among H, CH₃ and C₂H₅.

2. A tyre for vehicle wheels as claimed in claim 1, wherein said tyre comprises
- a carcass structure comprising at least one carcass layer having opposite lateral edges associated with respective bead structures comprising at least one annular anchoring element and at least one bead filler;
- a belt structure comprising at least one belt layer applied in a radially external position with respect to the carcass structure;
- a tread band applied in a radially external position with respect to said belt structure;
wherein at least one component of said tyre, being at least one structural element selected from among carcass structure, belt structure, bead structure, comprises a vulcanised elastomeric composition obtained by vulcanising a vulcanisable elastomeric composition comprising said co-vulcanising composition c).

3. A tyre for vehicle wheels as claimed in claim 2, wherein said at least one structural element comprises a belt layer comprising reinforcement elements oriented in a substantially circumferential direction, said belt layer comprising said vulcanised elastomeric composition obtained by vulcanising a vulcanisable elastomeric composition comprising said co-vulcanising composition c).

4. A tyre as claimed in one of claims 2 or 3 wherein said structural element comprises one or more textile and/or metal reinforcement elements.

5. A green tyre component comprising a vulcanisable elastomeric composition, wherein said vulcanisable elastomeric composition comprises at least
one elastomeric polymer P₁,
one reinforcement filler a),
one vulcanising agent b), and
the co-vulcanising composition c) as defined in claim 1.

6. A tyre or tyre component as claimed in any one of the preceding claims wherein said reinforcement filler a) is carbon black having a surface area greater than 40 m²/g, preferably greater than 50 m²/g, more preferably greater than 60 m²/g and/or less than 150 m²/g, preferably less than 120 m²/g.

7. A tyre manufacturing process comprising
- forming components of a green tyre on at least one forming drum;
- conforming, moulding and vulcanising the tyre;
wherein forming at least one of the green tyre components comprises:
- obtaining at least one green component comprising a vulcanisable elastomeric composition comprising at least
one elastomeric polymer P₁,
one reinforcement filler a),
one vulcanising agent b), and
the co-vulcanising composition c) as defined claim 1.

8. A co-vulcanising composition c), for vulcanising elastomeric tyre compositions, comprising
c1) at least one elastomeric polymer P₂,
c2) at least one zinc complex obtained by interaction between:
c3) from 20 to 80 phr with respect to P₂ of at least one zinc compound and
c4) from 20 to 80 phr with respect to P₂ of at least one lower (di)thiodicarboxylic acid of formula (I)
HOOC-CHR-CHR₁-S(ₙ)-CHR₂-CHR₃-COOH (I)
wherein
n represents an integer number selected from among 1 and 2;
R, R₁, R₂, R₃, equal or different from each other, are selected from among H, CH₃ and C₂H₅.

9. A co-vulcanising composition c) as claimed in claim 8 further comprising at least one plasticiser c5).

10. A precursor d) of the co-vulcanising composition c) comprising:
c1) at least one elastomeric polymer P₂,
c3) from 20 to 80 phr with respect to P₂ of at least one zinc compound,
c4) from 20 to 80 phr with respect to P₂ of at least one lower (di)thiodicarboxylic acid of formula (I)
HOOC-CHR-CHR₁-S₍ₙ₎-CHR₂-CHR₃-COOH (I)
wherein
n represents an integer number selected from among 1 and 2;
R, R₁, R₂, R₃, equal or different from each other, are selected from among H, CH₃ and C₂H₅.

11. A co-vulcanising composition c) as claimed in claims 8 or 9 or precursor d) as claimed in claim 10, wherein:
c1) the elastomeric polymer P₂ is a diene elastomeric polymer, preferably selected from among cis-1,4-polyisoprene (natural or synthetic, preferably natural rubber), 3,4-polyisoprene, polybutadiene, possibly halogenated copolymers of isoprene/isobutene, copolymers of 1,3-butadiene/acrylonitrile, copolymers of styrene/1,3-butadiene, copolymers of styrene/isoprene/1,3-butadiene, copolymers of styrene/1,3-butadiene/acrylonitrile, or mixtures thereof, and/or
c3) the zinc compound is a zinc salt, oxide or hydroxide, preferably it is a compound selected from among zinc carbonate, zinc bicarbonate, zinc hydroxide and zinc oxide, more preferably it is zinc oxide, and/or
c4) the (di)thiodicarboxylic acid is a compound of formula (I), wherein R, R₁, R₂ and R₃, are selected from among H and CH₃, preferably R, R₁, R₂ and R₃, are equal to each other and represent H, more preferably R, R₁, R₂ and R₃ represent H and n=2.

12. A co-vulcanising composition c) or precursor d) thereof as claimed in any one of claims 8 to 11 wherein said
c3) at least one zinc compound and
c4) at least one lower (di)thiodicarboxylic acid of formula (I) are in a weight ratio comprised between 1:5 and 5:1, preferably between 2:1 and 1:2, more preferably in a ratio of about 1:1, and/or the surface area of the zinc compound c3), is greater than 40 m²/g, preferably greater than 50 m²/g, more preferably greater than 70 m²/g.

13. A co-vulcanising composition c) or precursor d) thereof as claimed in any one of claims 8 to 12 comprising:
c1) at least one elastomeric polymer P₂,
c3) from 40 to 70 phr, preferably from 50 to 60 phr, of at least one zinc compound, and/or
c4) from 40 to 70 phr, preferably from 50 to 60 phr of at least one (di)thiodicarboxylic acid of formula (I).

14. A co-vulcanising composition c) or precursor d) thereof as claimed in claim 13 further comprising
c5) from 0.1 to 20 phr, preferably from 5 to 15 phr, of at least one plasticiser.

15. A process for preparing a co-vulcanising composition c) comprising
- supplying a mixer with the precursor d) comprising
c1) at least one elastomeric polymer P₂,
c3) from 20 to 80 phr with respect to P₂ of at least one zinc compound,
c4) from 20 to 80 phr with respect to P₂ of at least one lower (di)thiodicarboxylic acid of formula (I)
HOOC-CHR-CHR₁-S₍ₙ₎-CHR₂-CHR₃-COOH (I)
wherein
n represents an integer number selected from among 1 and 2;
R, R₁, R₂, R₃, equal or different from each other, are selected from among H, CH₃ and C₂H₅, and possibly
c5) at least one plasticiser,
components c1), c3), c4) and, possibly, c5) being supplied simultaneously or in sequence,
- mixing said components at a molten mass temperature lower than 130°C,
- removing the co-vulcanising composition c).

16. The process as claimed in claim 15 wherein the component c4) is added at a temperature lower than 100°C, preferably lower than 60°C.

17. The process as claimed in one of claims 15 or 16 wherein said mixer is of the continuous type and/or the time for mixing said components is less than 10 minutes, preferably comprised between 30 seconds and 4 minutes and/or the mixing energy is comprised between 50 and 300 kW/h.

18. The use of zinc compounds (c3) as stabilisers of lower (di)thiodicarboxylic acids of formula (I) (c4) in vulcanisable elastomeric compositions for tyres wherein (c3) and (c4) are independently comprised in said composition from 20 to 80 phr with respect to P₂.

19. The use as claimed in claim 18 wherein the zinc compound c3) is zinc oxide and the dithiodicarboxylic acid c4) is dithiodipropionic acid.

20. A method for manufacturing a tyre for vehicle wheels comprising:
forming a co-vulcanising composition by mixing from 20 to 80 phr with respect to P₂ of at least one zinc compound and from 20 to 80 phr with respect to P₂ of at least one lower (di)thiodicarboxylic acid of formula (I)
HOOC-CHR-CHR₁-S₍ₙ₎-CHR₂-CHR₃-COOH (I)
wherein
n represents an integer number selected from among 1 and 2;
R, R₁, R₂, R₃, equal or different from each other, are selected from among H, CH₃ and C₂H₅;
forming at least one green tyre component comprising a vulcanisable elastomeric composition comprising at least:
one elastomeric polymer,
one reinforcement filler,
one vulcanising agent and said co-vulcanising composition;
wherein forming said co-vulcanising composition comprises stabilizing said at least one lower (di)thiodicarboxylic acid of formula (I) through interaction of said at least one zinc compound and said at least one lower (di)thiodicarboxylic acid of formula (I), so as to reduce, below a preset threshold, the release of irritating by-products of said at least one (di)thiodicarboxylic acid at least during the formation of said tyre component.

## Patentansprüche

1. Reifen für Fahrzeugräder, wobei zumindest eine Komponente des Reifens eine vulkanisierte Elastomerzusammensetzung umfasst, die durch Vulkanisieren einer vulkanisierbaren Elastomerzusammensetzung erhalten wird, die Folgendes umfasst:
zumindest ein elastomeres Polymer P₁,
zumindest einen verstärkenden Füllstoff a),
zumindest ein Vulkanisationsmittel b), und
zumindest eine Zusatz-Vulkanisierzusammensetzung c), die erhalten wird durch Mischen von
c1) zumindest einem elastomeren Polymer P₂,
c2) zumindest einem Zinkkomplex, der erhalten wird durch Wechselwirkung zwischen:
c3) 20 bis 80 phr in Bezug auf P₂ zumindest einer Zinkverbindung, und
c4) 20 bis 80 in Bezug auf P₂ zumindest einer niederen (Di)thiodicarboxylsäure der Formel (I)
HOOC-CHR-CHR₁-S₍ₙ₎-CHR₂-CHR₃-COOH (I)
wobei
n für eine ganze Zahl ausgewählt aus 1 und 2 steht;
R, R₁, R₂, R₃, jeweils gleich oder unterschiedlich, aus H, CH₃ und C₂H₅ ausgewählt sind.

2. Reifen für Fahrzeugräder nach Anspruch 1, wobei der Reifen umfasst: eine Karkassenstruktur, die zumindest eine Karkassenlage mit gegenüberliegenden Seitenkanten aufweist, die jeweiligen Wulststrukturen zugeordnet sind, die zumindest ein ringförmiges Verankerungselement und zumindest einen Wulstfüllstoff umfassen;
eine Gürtelstruktur, die zumindest eine Gürtellage umfasst, die in Bezug auf die Karkassenstruktur in einer radial äußeren Position angelegt ist;
einen Laufflächenring, der in Bezug auf die Gürtelstruktur in einer radial äußeren Position angelegt ist;
wobei zumindest eine Komponente des Reifens, die zumindest ein Strukturelement ausgewählt aus Karkassenstruktur, Gürtelstruktur und Wulststruktur ist, eine vulkanisierte Elastomerzusammensetzung umfasst, die durch Vulkanisieren einer vulkanisierbaren Elastomerzusammensetzung erhalten wird, die die Zusatz-Vulkanisierzusammensetzung c) umfasst.

3. Reifen für Fahrzeugräder nach Anspruch 2, wobei das zumindest eine Strukturelement eine Gürtellage umfasst, die im Wesentlichen in Umfangsrichtung orientierte Verstärkungselemente umfasst, wobei die Gürtellage die vulkanisierte Elastomerzusammensetzung umfasst, die durch Vulkanisieren einer vulkanisierbaren Elastomerzusammensetzung erhalten wird, die die Zusatz-Vulkanisierzusammensetzung c) umfasst.

4. Reifen nach einem der Ansprüche 2 oder 3, wobei das Strukturelement ein oder mehrere textile und/oder Metall-Verstärkungselemente umfasst.

5. Rohreifenkomponente umfassend eine vulkanisierbare Elastomerzusammensetzung, wobei die vulkanisierbare Elastomerzusammensetzung zumindest ein elastomeres Polymer P₁,
einen verstärkenden Füllstoff a),
ein Vulkanisationsmittel b), und
die in Anspruch 1 definierte Zusatz-Vulkanisierzusammensetzung c) umfasst.

6. Reifen oder Reifenkomponente nach einem der vorhergehenden Ansprüche, wobei der verstärkende Füllstoff a) Kohlenstoffruß mit einem Oberflächenbereich größer als 40 m²/g, vorzugsweise größer als 50 m²/g, noch bevorzugter größer als 60 m²/g, und/oder kleiner als 150 m²/g, vorzugsweise kleiner als 120 m²/g ist.

7. Reifenherstellungsverfahren, umfassend die folgenden Schritte:
- Bilden von Komponenten eines Rohreifens an zumindest einer Formungstrommel;
- Zurichten, Formen und Vulkanisieren des Reifens;
wobei das Formen zumindest einer der Komponenten des Rohreifens umfasst:
- Erhalten zumindest einer Rohreifenkomponente umfassend eine vulkanisierbare Elastomerzusammensetzung umfassend zumindest
ein elastomeres Polymer P₁,
einen verstärkenden Füllstoff a),
ein Vulkanisationsmittel b), und
die in Anspruch 1 definierte Zusatz-Vulkanisierzusammensetzung c).

8. Zusatz-Vulkanisierzusammensetzung c), zur Vulkanisierung von Elastomerzusammensetzungen für Reifen, umfassend
c1) zumindest ein elastomeres Polymer P₂,
c2) zumindest einen Zinkkomplex, der erhalten wird durch Wechselwirkung zwischen:
c3) 20 bis 80 phr in Bezug auf P₂ zumindest einer Zinkverbindung, und
c4) 20 bis 80 in Bezug auf P₂ zumindest einer niederen (Di)thiodicarboxylsäure der Formel (I)
HOOC-CHR-CHR₁-S₍ₙ₎-CHR₂-CHR₃-COOH (I)
wobei
n für eine ganze Zahl ausgewählt aus 1 und 2 steht;
R, R₁, R₂, R₃, jeweils gleich oder unterschiedlich, aus H, CH₃ und C₂H₅ ausgewählt sind.

9. Zusatz-Vulkanisierzusammensetzung c) nach Anspruch 8, des Weiteren umfassend zumindest einen Weichmacher c5).

10. Vorläufer d) der Zusatz-Vulkanisierzusammensetzung c), umfassend:
c1) zumindest ein elastomeres Polymer P₂,
c3) 20 bis 80 phr in Bezug auf P₂ zumindest einer Zinkverbindung,
c4) 20 bis 80 in Bezug auf P₂ zumindest einer niederen (Di)thiodicarboxylsäure der Formel (I)
HOOC-CHR-CHR₁-S(ₙ)-CHR₂-CHR₃-COOH (I)
wobei
n für eine ganze Zahl ausgewählt aus 1 und 2 steht;
R, R₁, R₂, R₃, jeweils gleich oder unterschiedlich, aus H, CH₃ und C₂H₅ ausgewählt sind.

11. Zusatz-Vulkanisierzusammensetzung c) nach den Ansprüchen 8 oder 9, oder Vorläufer d) nach Anspruch 10, wobei:
c1) das elastomere Polymer P₂ ein elastomeres Dien-Polymer ist, vorzugsweise ausgewählt aus cis-1,4-Polyisopren (natürlich oder synthetisch, vorzugsweise natürlicher Gummi), 3,4-Polyisopren, Polybutadien, ggf. halogenierten Copolymeren von Isopren/Isobuten, Copolymeren von 1,3-Butadien/Acrylonitril, Copolymeren von Styrol/1,3-Butadien, Copolymeren von Styrol/Isopren/1,3-Butadien, Copolymeren von Styrol/1,3-Butadien/Acrylonitril, oder Mischungen davon,
und/oder
c3) die Zinkverbindung ein Zinksalz, -oxid oder -hydroxid ist, vorzugsweise eine Verbindung ausgewählt aus Zinkkarbonat, Zinkbikarbonat, Zinkhydroxid und Zinkoxid, noch bevorzugter Zinkoxid, und/oder
c4) die (Di)thiodicarboxylsäure eine Verbindung der Formel (I) ist, wobei R, R₁, R₂, R₃ aus H, CH₃ ausgewählt sind, R, R₁, R₂, R₃ gleich sind und für H stehen, und noch bevorzugter R, R₁, R₂, R₃ für H und n = 2 stehen.

12. Zusatz-Vulkanisierzusammensetzung c) oder deren Vorläufer d) nach einem der Ansprüche 8 bis 11, wobei
c3) die zumindest eine Zinkverbindung und
c4) die zumindest eine niedere (Di)thiodicarboxylsäure der Formel (I) in einem Gewichtsverhältnis zwischen 1:5 und 5:1 vorliegen, vorzugsweise zwischen 2:1 und 1:2, noch bevorzugter in einem Verhältnis von etwa 1:1, und/oder der Oberflächenbereich der Zinkverbindung c3) größer als 40 m²/g, vorzugsweise größer als m²/g, noch bevorzugter größer als 70 m²/g ist.

13. Zusatz-Vulkanisierzusammensetzung c) oder deren Vorläufer d) nach einem der Ansprüche 8 bis 12, umfassend:
c1) zumindest ein elastomeres Polymer P₂,
c3) 40 bis 70 phr, vorzugsweise 50 bis 60 phr, zumindest einer Zinkverbindung, und
c4) 40 bis 70 phr, vorzugsweise 50 bis 60 phr, zumindest einer niederen (Di)thiodicarboxylsäure der Formel (I).

14. Zusatz-Vulkanisierzusammensetzung c) oder deren Vorläufer d) nach Anspruch 13, des Weiteren umfassend
c5) 0,1 bis 20 phr, vorzugsweise 5 bis 15 phr, zumindest eines Weichmachers.

15. Verfahren zur Herstellung einer Zusatz-Vulkanisierzusammensetzung c), das folgende Schritte umfasst:
- Bereitstellen eines Mischers mit dem Vorläufer d), der Folgendes umfasst:
c1) zumindest ein elastomeres Polymer P₂,
c3) 20 bis 80 phr in Bezug auf P₂ zumindest einer Zinkverbindung,
c4) 20 bis 80 in Bezug auf P₂ zumindest einer niederen (Di)thiodicarboxylsäure der Formel (I)
HOOC-CHR-CHR₁-S(ₙ)-CHR₂-CHR₃-COOH (I)
wobei
n für eine ganze Zahl ausgewählt aus 1 und 2 steht;
R, R₁, R₂, R₃, jeweils gleich oder unterschiedlich, aus H, CH₃ und C₂H₅ ausgewählt sind, und ggf.
c5) zumindest einen Weichmacher,
wobei die Komponenten c1), c3), c4) und ggf. c5) gleichzeitig oder der Reihe nach zugeführt werden,
- Mischen der Komponenten bei einer Schmelzmassetemperatur unter 130 °C,
- Entfernen der Zusatz-Vulkanisierzusammensetzung c).

16. Verfahren nach Anspruch 15, wobei die Komponente c4) bei einer Temperatur unter 100 °C, vorzugsweise unter 60 °C, zugegeben wird.

17. Verfahren nach einem der Ansprüche 15 oder 16, wobei der Mischer vom kontinuierlichen Typ ist und/oder die Zeit zum Mischen der Komponenten weniger als 10 Minuten beträgt und vorzugsweise zwischen 30 Sekunden und 4 Minuten liegt, und/oder die Mischenergie zwischen 50 und 300 kW/h liegt.

18. Verwendung von Zinkverbindungen (c3) als Stabilisatoren für niedere (Di)thiodicarboxylsäuren der Formel (I) (c4) in vulkanisierbaren Elastomerzusammensetzungen für Reifen, wobei (c3) und (c4) unabhängig voneinander in der Zusammensetzung in einer Menge von 20 bis 80 phr in Bezug auf P₂ vorhanden sind.

19. Verwendung nach Anspruch 18, wobei die Zinkverbindung c3) Zinkoxid ist, und die Dithiodicarboxylsäure c4) Dithiodipropionsäure ist.

20. Verfahren zur Herstellung eines Reifens für Fahrzeugräder, wobei das Verfahren umfasst:
- Bilden einer Zusatz-Vulkanisierzusammensetzung durch Mischen von 20 bis 80 phr in Bezug auf P₂ zumindest einer Zinkverbindung und von 20 bis 80 phr, in Bezug auf P₂, zumindest einer niederen (Di)thiodicarboxylsäure der Formel (I)
HOOC-CHR-CHR₁-S(ₙ)-CHR₂-CHR₃-COOH (I)
wobei
n für eine ganze Zahl ausgewählt aus 1 und 2 steht;
R, R₁, R₂, R₃, jeweils gleich oder unterschiedlich, aus H, CH₃ und C₂H₅ ausgewählt sind,
- Bilden zumindest einer Rohreifenkomponente umfassend eine vulkanisierbare Elastomerzusammensetzung, die Folgendes umfasst:
ein elastomeres Polymer,
einen verstärkenden Füllstoff,
ein Vulkanisationsmittel und die Zusatz-Vulkanisierzusammensetzung;
wobei das Bilden der Zusatz-Vulkanisierzusammensetzung das Stabilisieren der zumindest einen niederen (Di)thiodicarboxylsäure der Formel (I) durch Wechselwirkung der zumindest einen Zinkverbindung und der zumindest einen niederen (Di)thiodicarboxylsäure der Formel (I) umfasst, um die Freisetzung störender Nebenprodukte der zumindest einen (Di)thiodicarboxylsäure zumindest während der Bildung der Reifenkomponente unter einen voreingestellten Grenzwert zu verringern.

## Revendications

1. Pneu pour roues de véhicule dans lequel au moins un composant dudit pneu comprend une composition élastomère vulcanisée obtenue par vulcanisation d'une composition élastomère vulcanisable comprenant :
au moins un polymère élastomère P₁,
au moins une charge de renforcement a),
au moins un agent de vulcanisation b), et
au moins une composition de covulcanisation c) obtenue par mélange
c1) d'au moins un polymère élastomère P₂,
c2) d'au moins un complexe de zinc obtenu par interaction entre :
c3) 20 à 80 phr par rapport à P₂ d'au moins un composé de zinc, et
c4) 20 à 80 phr par rapport à P₂ d'au moins un acide (di)thiodicarboxylique inférieur de formule (I)
HOOC-CHR-CHR₁-S₍ₙ₎-CHR₂-CHR₃-COOH (I)
dans laquelle
n représente un nombre entier choisi entre 1 et 2 ;
R, R₁, R₂, R₃, identiques ou différents les uns des autres, sont choisis parmi H, CH₃ et C₂H₅.

2. Pneu pour roues de véhicule tel que revendiqué dans la revendication 1, dans lequel ledit pneu comprend
- une structure de carcasse comprenant au moins une couche de carcasse ayant des bords latéraux opposés associés à des structures de talon respectives comprenant au moins un élément d'ancrage annulaire et au moins un bourrage sur tringle ;
- une structure de ceinture comprenant au moins une couche de ceinture appliquée dans une position radialement externe par rapport à la structure de carcasse ;
- une bande de roulement appliquée dans une position radialement externe par rapport à ladite structure de ceinture ;
dans lequel au moins un composant dudit pneu, qui est au moins un élément de structure choisi parmi la structure de carcasse, la structure de ceinture, la structure de talon, comprend une composition élastomère vulcanisée obtenue par vulcanisation d'une composition élastomère vulcanisable comprenant ladite composition de covulcanisation c).

3. Pneu pour roues de véhicule tel que revendiqué dans la revendication 2, dans lequel ledit au moins un élément de structure comprend une couche de ceinture comprenant des éléments de renforcement orientés dans une direction sensiblement circonférentielle, ladite couche de ceinture comprenant ladite composition élastomère vulcanisée obtenue par vulcanisation d'une composition élastomère vulcanisable comprenant ladite composition de covulcanisation c).

4. Pneu tel que revendiqué dans l'une des revendications 2 et 3, dans lequel ledit élément de structure comprend un ou plusieurs élément(s) de renforcement textile(s) et/ou métallique(s).

5. Composant de pneu cru comprenant une composition élastomère vulcanisable, dans lequel ladite composition élastomère vulcanisable comprend au moins
un polymère élastomère P₁,
une charge de renforcement a),
un agent de vulcanisation b), et
la composition de covulcanisation c) telle que définie dans la revendication 1.

6. Pneu ou composant de pneu tel que revendiqué dans l'une quelconque des revendications précédentes, dans lequel ladite charge de renforcement a) est du noir de carbone ayant une surface supérieure à 40 m²/g, de préférence supérieure à 50 m²/g, plus préférablement supérieure à 60 m²/g et/ou inférieure à 150 m²/g, de préférence inférieure à 120 m²/g.

7. Procédé de fabrication de pneu comprenant le fait
- de former des composants d'un pneu cru sur au moins un tambour de formation ;
- de conformer, mouler et vulcaniser le pneu ;
dans lequel la formation d'au moins l'un des composants de pneu cru comprend le fait :
- d'obtenir au moins un composant cru comprenant une composition élastomère vulcanisable comprenant au moins
un polymère élastomère P₁,
une charge de renforcement a),
un agent de vulcanisation b), et
la composition de covulcanisation c) telle que définie dans la revendication 1.

8. Composition de covulcanisation c), pour la vulcanisation de compositions élastomères de pneu, comprenant
c1) au moins un polymère élastomère P₂,
c2) au moins un complexe de zinc obtenu par interaction entre :
c3) 20 à 80 phr par rapport à P₂ d'au moins un composé de zinc, et
c4) 20 à 80 phr par rapport à P₂ d'au moins un acide (di)thiodicarboxylique inférieur de formule (I)
HOOC-CHR-CHR₁-S₍ₙ₎-CHR₂-CHR₃-COOH (I)
dans laquelle
n représente un nombre entier choisi entre 1 et 2 ;
R, R₁, R₂, R₃, identiques ou différents les uns des autres, sont choisis parmi H, CH₃ et C₂H₅.

9. Composition de covulcanisation c) telle que revendiquée dans la revendication 8, comprenant en outre au moins un plastifiant c5).

10. Précurseur d) de la composition de covulcanisation c) comprenant :
c1) au moins un polymère élastomère P₂,
c3) 20 à 80 phr par rapport à P₂ d'au moins un composé de zinc,
c4) 20 à 80 phr par rapport à P₂ d'au moins un acide (di)thiodicarboxylique inférieur de formule (I)
HOOC-CHR-CHR₁-S₍ₙ₎-CHR₂-CHR₃-COOH (I)
dans laquelle
n représente un nombre entier choisi entre 1 et 2 ;
R, R₁, R₂, R₃, identiques ou différents les uns des autres, sont choisis parmi H, CH₃ et C₂H₅.

11. Composition de covulcanisation c) telle que revendiquée dans la revendication 8 ou 9 ou précurseur d) tel que revendiqué dans la revendication 10, où :
c1) le polymère élastomère P₂ est un polymère élastomère diénique, de préférence choisi parmi le cis-1,4-polyisoprène (du caoutchouc naturel ou synthétique, de préférence naturel), le 3,4-polyisoprène, le polybutadiène, des copolymères éventuellement halogénés d'isoprène/isobutène, des copolymères de 1,3-butadiène/acrylonitrile, les copolymères de styrène/1,3-butadiène, des copolymères de styrène/isoprène/1,3-butadiène, des copolymères de styrène/1,3-butadiène/acrylonitrile, ou des mélanges de ceux-ci, et/ou
c3) le composé de zinc est un sel, un oxyde ou un hydroxyde de zinc, de préférence il s'agit d'un composé choisi parmi le carbonate de zinc, le bicarbonate de zinc, l'hydroxyde de zinc et l'oxyde de zinc, plus préférablement il s'agit de l'oxyde de zinc, et/ou
c4) l'acide (di)thiodicarboxylique est un composé de formule (I), dans laquelle R, R₁, R₂ et R₃ sont choisis parmi H et CH₃, de préférence R, R₁, R₂ et R₃, sont identiques les uns aux autres et représentent H, plus préférablement R, R₁, R₂ et R₃ représentent H et n = 2.

12. Composition de covulcanisation c) ou précurseur d) de celle-ci telle/tel que revendiqué(e) dans l'une quelconque des revendications 8 à 11, où
c3) ledit au moins un composé de zinc, et
c4) ledit au moins un acide (di)thiodicarboxylique inférieur de formule (I) sont dans un rapport pondéral compris entre 1:5 et 5:1, de préférence entre 2:1 et 1:2, plus préférablement dans un rapport d'environ 1:1, et/ou la surface du composé de zinc c3) est supérieure à 40 m²/g, de préférence supérieure à 50 m²/g, plus préférablement supérieure à 70 m²/g.

13. Composition de covulcanisation c) ou précurseur d) de celle-ci telle/tel que revendiqué(e) dans l'une quelconque des revendications 8 à 12, comprenant :
c1) au moins un polymère élastomère P₂,
c3) 40 à 70 phr, de préférence 50 à 60 phr, d'au moins un composé de zinc, et/ou
c4) 40 à 70 phr, de préférence 50 à 60 phr d'au moins un acide (di)thiodicarboxylique de formule (I).

14. Composition de covulcanisation c) ou précurseur d) de celle-ci telle/tel que revendiqué(e) dans la revendication 13, comprenant en outre
c5) 0,1 à 20 phr, de préférence 5 à 15 phr, d'au moins un plastifiant.

15. Procédé de préparation d'une composition de covulcanisation c) comprenant le fait
- de fournir, à un mélangeur, le précurseur d) comprenant
c1) au moins un polymère élastomère P₂,
c3) 20 à 80 phr par rapport à P₂ d'au moins un composé de zinc,
c4) 20 à 80 phr par rapport à P₂ d'au moins un acide (di)thiodicarboxylique inférieur de formule (I)
HOOC-CHR-CHR₁-S₍ₙ₎-CHR₂-CHR₃-COOH (I)
dans laquelle
n représente un nombre entier choisi entre 1 et 2 ;
R, R₁, R₂, R₃, identiques ou différents les uns des autres, sont choisis parmi H, CH₃ et C₂H₅, et éventuellement
c5) au moins un plastifiant,
les composants c1), c3), c4) et, éventuellement, c5) étant fournis simultanément ou successivement,
- de mélanger lesdits composants à une température de masse fondue inférieure à 130°C,
- d'enlever la composition de covulcanisation c).

16. Procédé tel que revendiqué dans la revendication 15, dans lequel le composant c4) est ajouté à une température inférieure à 100°C, de préférence inférieure à 60°C.

17. Procédé tel que revendiqué dans l'une des revendications 15 ou 16, dans lequel ledit mélangeur est du type continu et/ou le temps de mélange desdits composants est inférieur à 10 minutes, de préférence compris entre 30 secondes et 4 minutes et/ou l'énergie de mélange est comprise entre 50 et 300 kW/h.

18. Utilisation de composés de zinc (c3) comme stabilisants d'acides (di)thiodicarboxyliques inférieurs de formule (I) (c4) dans des compositions élastomères vulcanisables pour pneus où (c3) et (c4) sont indépendamment compris dans ladite composition en une quantité comprise entre 20 et 80 phr par rapport à P₂.

19. Utilisation telle que revendiquée dans la revendication 18, dans laquelle le composé de zinc c3) est l'oxyde de zinc et l'acide dithiodicarboxylique c4) est l'acide dithiodipropionique.

20. Procédé de fabrication d'un pneu pour roues de véhicule comprenant le fait :
de former une composition de covulcanisation en mélangeant 20 à 80 phr par rapport à P₂ d'au moins un composé de zinc et 20 à 80 phr par rapport à P₂ d'au moins un acide (di)thiodicarboxylique inférieur de formule (I)
HOOC-CHR-CHR₁-S₍ₙ₎-CHR₂-CHR₃-COOH (I)
dans laquelle
n représente un nombre entier choisi entre 1 et 2 ;
R, R₁, R₂, R₃, identiques ou différents les uns des autres, sont choisis parmi H, CH₃ et C₂H₅ ;
de former au moins un composant de pneu cru comprenant une composition élastomère vulcanisable comprenant au moins :
un polymère élastomère,
une charge de renforcement,
un agent de vulcanisation et ladite composition de covulcanisation ;
dans lequel la formation de ladite composition de covulcanisation comprend le fait de stabiliser ledit au moins un acide (di)thiodicarboxylique inférieur de formule (I) par interaction dudit au moins un composé de zinc et dudit au moins un acide (di)thiodicarboxylique inférieur de formule (I), de manière à réduire, en dessous d'un seuil préétabli, la libération de sous-produits irritants dudit au moins un acide (di)thiodicarboxylique au moins au cours de la formation dudit composant de pneu.
